# EUROPEAN PATENT APPLICATION

(11) **EP 4 678 482 A1**
(43) Date of publication of application: **14.01.2026**
(21) Application number: 24787778.0
(22) Date of filing: 25.01.2024
(51) Int. Cl.: B60R 16/037, B60N 2/02

(54) **COCKPIT ADJUSTMENT METHOD AND DEVICE, CHIP, AND VEHICLE**

(30) Priority: 11.04.2023 CN 202310415340
(71) Applicant: Shenzhen Yinwang Intelligent Technologies Co., Ltd., Shenzhen, Guangdong 518110 (CN)
(72) Inventor: LAN, Ruidong, Shenzhen, Guangdong 518129 (CN); YANG, Jinghuan, Shenzhen, Guangdong 518129 (CN); SONG, Xianxi, Shenzhen, Guangdong 518129 (CN); ZHANG, Daiqi, Shenzhen, Guangdong 518129 (CN); TANG, Qiuyuan, Shenzhen, Guangdong 518129 (CN)
(74) Representative: MERH-IP Matias Erny Reichl Hoffmann Patentanwälte PartG mbB
(86) International application number: PCT/CN2024/074108
(87) International publication number: WO 2024/212672

(57) **Abstract**

A cockpit adjustment method and apparatus, a chip, and a vehicle are disclosed. In the cockpit adjustment method, a seat setting item may be first adjusted based on three-dimensional spatial position information obtained after a user sits on a seat, to ensure that a height, a position, an angle, and the like of the seat meet a comfort requirement and a safety requirement of the user during driving. After the seat setting item is adjusted, three-dimensional spatial information of the user in a current seat state is re-obtained. Then a setting item of another adjustable component is further adjusted based on the re-obtained three-dimensional spatial information of the user, to ensure that a position, an angle, a height, a size, and the like of the another adjustable component can meet a comfort requirement and a safety requirement of the user during driving.

## Description

This application claims priority to Chinese Patent Application No. 202310415340.X, filed with the China National Intellectual Property Administration on April 11, 2023 and entitled "COCKPIT ADJUSTMENT METHOD AND APPARATUS, CHIP, AND VEHICLE", which is incorporated herein by reference in its entirety.

### TECHNICAL FIELD

This application relates to the field of artificial intelligence technologies, and in particular, to a cockpit adjustment method and apparatus, a chip, and a vehicle.

### BACKGROUND

Currently, a user may adjust a hardware device, for example, a seat, a steering wheel, a central control screen, or a rearview mirror, in a cockpit of a vehicle based on a driving requirement, comfort, and the like of the user. In some adjustment solutions, a user may perform an operation on an adjustment button, an adjustment apparatus, or the like corresponding to a hardware device, to adjust the hardware device. In some other adjustment solutions, adjustment controls corresponding to some hardware devices may be displayed on a central control screen, and a user may perform an operation on a corresponding control on the central control screen without adjusting a physical button.

However, in these adjustment solutions, when adjusting a hardware device, a user usually cannot complete adjustment at a time, and needs to repeatedly perform operations on a physical button, a control, or the like a plurality of times. This not only increases operation difficulty, complexity, and the like for the user, but also affects user experience.

### SUMMARY

Embodiments of this application provide a cockpit adjustment method and apparatus, a chip, and a vehicle. This can prevent a user from repeatedly performing operations on one cockpit component a plurality of times, and therefore improve user experience. This can also make adjustment on an adjustable component, including a seat, more accurate, to meet a safety requirement and a comfort requirement.

To achieve the foregoing objectives, the following technical solutions are used in embodiments of this application.

According to a first aspect, a cockpit adjustment method is provided. In the method, first three-dimensional spatial position information of a user in a cockpit may be obtained after the user sits on a seat, where the cockpit includes the seat and an adjustable component, and the adjustable component includes one or more of a steering wheel, a rearview mirror, and an imaging picture of a head-up display. Then body size information of the user is determined based on the first three-dimensional spatial position information, and a seat setting item of the seat is adjusted based on the body size information, where the seat setting item includes one or more of an angle, a position, and a height of the seat. Second three-dimensional spatial position information of the user in the cockpit is obtained after the seat setting item is adjusted. Finally, a component setting item of the adjustable component is adjusted based on the second three-dimensional spatial position information, where the component setting item includes one or more of a position, a height, an angle, and a size of the adjustable component.

The first three-dimensional (3 dimensions, 3D) spatial position information and the second three-dimensional (3D) spatial position information respectively represent 3D information of the user at different moments and/or in different postures in 3D space. The 3D spatial position information includes information of three dimensions, and the user represented by the information is three-dimensional. Based on the 3D spatial position information, the body size information of the user can be more accurately restored or determined, and the seat, the adjustable component, and the like in the cockpit can be more accurately adjusted.

In some possible application scenarios, the body size information of the user may include but is not limited to an eye position, a height, a contour, a weight, an arm length, a leg length, and the like.

In addition, in the cockpit adjustment method, the angle, the position, the height, and the like of the seat are first adjusted, and the seat may not be re-adjusted when another adjustable component is subsequently adjusted. Therefore, after the user sits on the adjusted seat, a posture of the user may be understood as having no change or having a slight change. In this case, the adjustment on the another adjustable component does not affect the previously adjusted seat, and a position, an angle, a height, a size, and the like of the another adjustable component can also be adjusted more accurately based on the three-dimensional spatial position information of the user that is obtained after the seat is adjusted. This can prevent the user from repeatedly performing operations or adjustment on one component a plurality of times, and can also make adjustment on an adjustable component, including the seat, more accurate, to meet a user requirement and ensure user experience.

In an implementation of the first aspect, in the foregoing method, in the case of obtaining the first three-dimensional spatial position information, first prompt information may be first displayed after the user sits on the seat, where the first prompt information is used to remind the user to adjust a sitting posture. Pose information of the user in the cockpit is obtained after the first prompt information is displayed for preset duration, where the pose information includes one or more of a human body image, point cloud information, and radar imaging information of the user. Finally, the first three-dimensional spatial position information of the user in a spatial coordinate system of the cockpit is determined based on the pose information.

In addition, in some possible application scenarios, the pose information of the user in the cockpit may be obtained by a sensor or the like. In some other possible application scenarios, a manner of displaying the first prompt information may include but is not limited to displaying the first prompt information, broadcasting the first prompt information, and the like.

In the foregoing implementation, the first prompt information can enable the user to make a more accurate posture. Because the user spends specific time in adjusting a posture after receiving the first prompt information, the pose information is obtained only after the first prompt information is displayed for the preset duration. In this way, sufficient time is reserved for the user to adjust the posture, to ensure that the posture of the user meets a requirement of the first prompt information or ensure that the posture of the user is standard, and ensure that the obtained pose information is more accurate. In addition, in the foregoing method, the first three-dimensional spatial position information may alternatively be determined based on a plurality of types of pose information. For example, the first three-dimensional spatial position information is determined based on the human body image, the point cloud information, and the radar imaging information.

In an implementation of the first aspect, in the foregoing method, in the case of adjusting the seat setting item of the seat, a preset configuration parameter, matching the body size information, of the seat setting item may be first obtained, and then one or more of the angle, the position, and the height of the seat is/are adjusted based on the preset configuration parameter of the seat setting item.

In the foregoing implementation, the preset configuration parameter may be preset, or may be obtained by performing constraint computation on the body size information of the user in terms of line-of-sight safety and spatial comfort. After the seat is adjusted based on the preset configuration parameter, the height, the position, the angle, and the like of the seat can better match a current posture or body size of the user, and also meet a driving habit of the user, to ensure driving safety and comfort.

In an implementation of the first aspect, in the foregoing method, in the case of adjusting the component setting item of the adjustable component, an eye position and an upper-body position of the user and an arm length of the user may be determined based on the second three-dimensional spatial position information. Then a preset configuration parameter of a steering wheel setting item is obtained, where the preset configuration parameter matches the eye position, the upper-body position, and the arm length. Finally, a height and an angle of the steering wheel are adjusted based on the preset configuration parameter of the steering wheel setting item.

In the foregoing implementation, the preset configuration parameter may be preset, or may be obtained by performing constraint computation on the eye position and the arm length of the user in terms of line-of-sight safety and spatial comfort. After the steering wheel is adjusted based on the preset configuration parameter, the height, the angle, and the like of the steering wheel can better match a current posture of the user, and also meet a driving habit of the user, to ensure driving safety and comfort.

In an implementation of the first aspect, in the foregoing method, in the case of adjusting the component setting item of the adjustable component, an eye position of the user may be determined based on the second three-dimensional spatial position information. Then a preset configuration parameter, matching the eye position, of the imaging picture of the head-up display is obtained, and a position and a size of the imaging picture of the head-up display are adjusted based on the preset configuration parameter of the imaging picture of the head-up display.

In the foregoing implementation, the preset configuration parameter may be preset, or may be obtained by performing constraint computation on the eye position and the like of the user in terms of line-of-sight safety and spatial comfort. After the imaging picture of the head-up display is adjusted based on the preset configuration parameter, the position, the size, and the like of the imaging picture of the head-up display can better match a current posture of the user, and also meet a driving habit of the user, to ensure driving safety and comfort.

In an implementation of the first aspect, in the foregoing method, in the case of adjusting the component setting item of the adjustable component, an eye position of the user may be determined based on the second three-dimensional spatial position information. Then a preset configuration parameter of the rearview mirror is determined based on the eye position and a vehicle size, and an angle of the rearview mirror is adjusted based on the preset configuration parameter of the rearview mirror.

In the foregoing implementation, the preset configuration parameter is determined according to an implementation safety requirement. After the rearview mirror is adjusted based on the preset configuration parameter, the user views, from the rearview mirror in a current posture, an imaging picture that meets a preset condition, and the angle of the rearview mirror can also better match the current posture of the user, and also meet a driving habit of the user, to ensure driving safety and comfort.

In an implementation of the first aspect, in the foregoing method, in the case of obtaining the second three-dimensional spatial position information of the user in the cockpit, second prompt information may be first displayed after the seat setting item of the seat is adjusted, where the second prompt information is used to remind the user to adjust the seat setting item of the seat. After the second prompt information is displayed, a first adjustment operation performed by the user on the seat setting item is received. Then, in response to the first adjustment operation, the seat setting item is re-adjusted, and current second three-dimensional spatial position information of the user in the cockpit is obtained.

In the foregoing implementation, because automatic adjustment on the seat may not meet a requirement, a driving habit, or the like of the user, the second prompt information is displayed to remind the user to perform manual adjustment. After receiving the second prompt information, the user may perform the first adjustment operation on the seat setting item, to ensure that the angle, the position, and the height of the seat better meet a requirement or a driving habit of the user.

In an implementation of the first aspect, in the foregoing method, in response to the first adjustment operation, a first configuration parameter, obtained through the first adjustment operation, of the seat setting item may be further stored, and then the first configuration parameter of the seat setting item is associated with the user.

In an implementation of the first aspect, in the foregoing method, third prompt information may be further displayed after the component setting item of the adjustable component is adjusted, where the third prompt information is used to remind the user to adjust the component setting item of the adjustable component. After the third prompt information is displayed, a second adjustment operation performed by the user on the component setting item is received. Then, in response to the second adjustment operation, the component setting item is re-adjusted, and a first configuration parameter, obtained through the second adjustment operation, of the component setting item is stored. Finally, the first configuration parameter of the component setting item is associated with the user.

In the foregoing implementation, after a component setting item of an adjustable component other than the seat is adjusted, the third prompt information may be displayed to remind the user to manually adjust the component setting item of the adjustable component. After receiving the third prompt information, the user may perform the second adjustment operation on the component setting item, to ensure that the angle, the position, the height, the size, and the like of the adjustable component better meet a requirement or a driving habit of the user.

In an implementation of the first aspect, in the foregoing method, after the same user sits on the seat again, a cockpit configuration parameter associated with the user may be further obtained, where the cockpit configuration parameter includes the first configuration parameter of the seat setting item and the first configuration parameter of the component setting item that are stored. Then the seat setting item and the component setting item are separately adjusted based on the cockpit configuration parameter.

In the foregoing implementation, one user may drive a vehicle a plurality of times. However, if linkage adjustment needs to be performed on the seat and another adjustable component before each time of driving, efficiency of cockpit adjustment is greatly reduced. Based on this, when the user drives the vehicle for the first time, the user may be prompted to adjust a posture and perform linkage adjustment on the seat and the another adjustable component. A configuration parameter of a seat setting item and a configuration parameter of a component setting item of the adjustable component that are obtained through adjustment are stored and are associated with the current user. When the same user drives the vehicle again, a series of configuration parameters corresponding to the user may be directly obtained, and the seat and the another adjustable component are directly adjusted based on the configuration parameters. Because positions, heights, angles, sizes, and the like of the seat and the another adjustable component that are adjusted during the first driving meet a driving safety requirement and a driving comfort requirement of the user, when the same user drives the vehicle again, the seat and the another adjustable component are directly adjusted by using the configuration parameters of the seat setting item and the component setting item that are obtained through adjustment during the first driving, so that the seat and the another adjustable component can also meet the driving safety requirement and the driving comfort requirement of the user.

In an implementation of the first aspect, in the foregoing method, after the seat setting item and the component setting item are adjusted based on the cockpit configuration parameter associated with the user, a second configuration parameter, matching current body size information, of the seat setting item may be further obtained. In addition, the seat setting item is adjusted based on the second configuration parameter of the seat setting item when a degree of difference between the second configuration parameter of the seat setting item and the first configuration parameter of the seat setting item is greater than or equal to a preset degree of difference.

In the foregoing implementation, because a body size, a sitting posture, or the like of the user may change at non-first driving of the user, after the seat setting item is adjusted based on the cockpit configuration parameter associated with the user, the second configuration parameter, matching the current body size information, of the seat setting item may alternatively be re-obtained. When the degree of difference between the current second configuration parameter of the seat setting item and the first configuration parameter of the seat setting item in the cockpit configuration parameter obtained by the vehicle is large, the seat setting item may be re-adjusted based on the current second configuration parameter of the seat setting item, so that an adjusted angle, height, position, and the like of the seat meet a safety requirement and a comfort requirement of the user in a current state.

In an implementation of the first aspect, in the foregoing method, after the seat setting item is adjusted based on the second configuration parameter of the seat setting item, a second configuration parameter, matching the current second three-dimensional spatial position information of the user, of the component setting item may be further obtained. In addition, the component setting item is adjusted based on the second configuration parameter of the component setting item when a degree of difference between the second configuration parameter of the component setting item and the first configuration parameter of the component setting item is greater than or equal to a preset degree of difference.

In the foregoing implementation, after the seat setting item is re-adjusted, the current second configuration parameter of the component setting item of the adjustable component is further obtained. When the degree of difference between the current second configuration parameter of the component setting item and the first configuration parameter of the component setting item in the cockpit configuration parameter obtained by the vehicle is large, the component setting item may be re-adjusted based on the current second configuration parameter of the component setting item, so that an adjusted angle, height, position, size, and the like of the adjustable component meet a safety requirement and a comfort requirement of the user in a current state.

According to a second aspect, a cockpit adjustment apparatus is provided, and includes a first information obtaining module, a first adjustment module, a second information obtaining module, and a second adjustment module. The first information obtaining module is configured to obtain first three-dimensional spatial position information of a user in a cockpit after the user sits on a seat. The first adjustment module is configured to determine body size information of the user based on the first three-dimensional spatial position information, and adjust a seat setting item of the seat based on the body size information. The second information obtaining module is configured to obtain second three-dimensional spatial position information of the user in the cockpit after the seat setting item is adjusted. The second adjustment module is configured to adjust a component setting item of an adjustable component based on the second three-dimensional spatial position information.

The cockpit includes the seat and the adjustable component. The adjustable component includes one or more of a steering wheel, a rearview mirror, and an imaging picture of a head-up display. The component setting item includes one or more of a position, a height, an angle, and a size of the adjustable component. The seat setting item includes one or more of an angle, a position, and a height of the seat.

In an implementation of the second aspect, the first adjustment module is further configured to: obtain a preset configuration parameter, matching the body size information, of the seat setting item; and adjust one or more of the angle, the position, and the height of the seat based on the preset configuration parameter of the seat setting item.

In an implementation of the second aspect, the second adjustment module is further configured to: determine an eye position and an upper-body position of the user and an arm length of the user based on the second three-dimensional spatial position information; obtain a preset configuration parameter of a steering wheel setting item, where the preset configuration parameter matches the eye position, the upper-body position, and the arm length; and adjust a height and an angle of the steering wheel based on the preset configuration parameter of the steering wheel setting item.

In an implementation of the second aspect, the second adjustment module is further configured to: determine an eye position of the user based on the second three-dimensional spatial position information; obtain a preset configuration parameter, matching the eye position, of the imaging picture of the head-up display; and adjust a position and a size of the imaging picture of the head-up display based on the preset configuration parameter of the imaging picture of the head-up display.

In an implementation of the second aspect, the second adjustment module is further configured to: determine an eye position of the user based on the second three-dimensional spatial position information; determine a preset configuration parameter of the rearview mirror based on the eye position and a vehicle size; and adjust an angle of the rearview mirror based on the preset configuration parameter of the rearview mirror.

In an implementation of the second aspect, the second information obtaining module is further configured to: display second prompt information after the seat setting item of the seat is adjusted; after the second prompt information is displayed, receive a first adjustment operation performed by the user on the seat setting item; and in response to the first adjustment operation, re-adjust the seat setting item, and obtain current second three-dimensional spatial position information of the user in the cockpit. The second prompt information is used to remind the user to adjust the seat setting item of the seat.

In an implementation of the second aspect, the cockpit adjustment apparatus further includes an association module. The association module is configured to: in response to the first adjustment operation, store a first configuration parameter, obtained through the first adjustment operation, of the seat setting item; and associate the first configuration parameter of the seat setting item with the user.

In an implementation of the second aspect, the second adjustment module is further configured to: display third prompt information after the component setting item of the adjustable component is adjusted; after the third prompt information is displayed, receive a second adjustment operation performed by the user on the component setting item; and re-adjust the component setting item in response to the second adjustment operation. In addition, the association module is further configured to: store a first configuration parameter, obtained through the second adjustment operation, of the component setting item; and associate the first configuration parameter of the component setting item with the user. The third prompt information is used to remind the user to adjust the component setting item of the adjustable component.

In an implementation of the second aspect, the cockpit adjustment apparatus further includes a third adjustment module. The third adjustment module is configured to: after the same user sits on the seat again, obtain a cockpit configuration parameter associated with the user, where the cockpit configuration parameter includes the first configuration parameter of the seat setting item and the first configuration parameter of the component setting item that are stored; and separately adjust the seat setting item and the component setting item based on the cockpit configuration parameter.

In an implementation of the second aspect, the first adjustment module is further configured to: after the seat setting item and the component setting item are adjusted based on the cockpit configuration parameter associated with the user, obtain a second configuration parameter, matching current body size information, of the seat setting item; and adjust the seat setting item based on the second configuration parameter of the seat setting item when a degree of difference between the second configuration parameter of the seat setting item and the first configuration parameter of the seat setting item is greater than or equal to a preset degree of difference.

In an implementation of the second aspect, the second adjustment module is further configured to: after the seat setting item is adjusted based on the second configuration parameter of the seat setting item, obtain a second configuration parameter, matching the current second three-dimensional spatial position information of the user, of the component setting item; and adjust the component setting item based on the second configuration parameter of the component setting item when a degree of difference between the second configuration parameter of the component setting item and the first configuration parameter of the component setting item is greater than or equal to a preset degree of difference.

According to a third aspect, a chip is provided, and includes a memory and one or more processors. The memory is coupled to the processor. The memory stores computer program code. The computer program code includes computer instructions. When the computer instructions are executed by the processor, the chip is enabled to perform the cockpit adjustment method according to any one of the first aspect or the implementations of the first aspect.

According to a fourth aspect, a vehicle is provided. A cockpit of the vehicle includes a first controller, a second controller, a sensor, a seat, and an adjustable component. The adjustable component includes one or more of a steering wheel, a rearview mirror, and an imaging picture of a head-up display. The first controller is separately connected to the seat and the adjustable component. The second controller is connected to the sensor. The first controller is connected to the second controller. The second controller is configured to obtain pose information of a user in the cockpit through the sensor, where the pose information includes one or more of a human body image, point cloud information, and radar imaging information of the user. The first controller is configured to obtain the pose information from the second controller, and obtain first three-dimensional spatial position information of the user in the cockpit based on the pose information after the user sits on the seat. The first controller is further configured to determine body size information of the user based on the first three-dimensional spatial position information, and adjust a seat setting item of the seat based on the body size information, where the seat setting item includes one or more of an angle, a position, and a height of the seat. The first controller is further configured to: after the seat setting item is adjusted, obtain the pose information from the second controller, and obtain second three-dimensional spatial position information of the user in the cockpit. The first controller is further configured to adjust a component setting item of the adjustable component based on the second three-dimensional spatial position information, where the component setting item includes one or more of a position, a height, an angle, and a size of the adjustable component.

According to a fifth aspect, a vehicle is provided, and includes the cockpit adjustment apparatus according to the second aspect, or includes the chip according to the third aspect.

According to a sixth aspect, a computer-readable storage medium is provided, and includes computer instructions. When the computer instructions are run on a chip, the chip is enabled to perform the cockpit adjustment method according to any one of the first aspect or the implementations of the first aspect.

According to a seventh aspect, a computer program product is provided. When the computer program product is run on a computer, the computer is enabled to perform the cockpit adjustment method according to any one of the first aspect or the implementations of the first aspect.

It can be understood that, for benefits that can be achieved by the cockpit adjustment apparatus according to the second aspect, the chip according to the third aspect, the vehicle according to the fourth aspect, the vehicle according to the fifth aspect, the computer-readable storage medium according to the sixth aspect, and the computer program product according to the seventh aspect, reference may be made to the benefits according to any one of the first aspect or the possible design manners of the first aspect. Details are not described herein again.

### BRIEF DESCRIPTION OF DRAWINGS

FIG. 1 is a diagram of a communication system according to an embodiment of this application;
FIG. 2 is a diagram of a structure of a vehicle according to an embodiment of this application;
FIG. 3 is a first diagram of a structure of a cockpit of a vehicle according to an embodiment of this application;
FIG. 4 is a second diagram of a structure of a cockpit of a vehicle according to an embodiment of this application;
FIG. 5 is a schematic flowchart of a cockpit adjustment method for a vehicle according to an embodiment of this application;
FIG. 6 is a diagram of displaying prompt information according to an embodiment of this application;
FIG. 7 is a diagram of obtaining three-dimensional spatial position information of a head according to an embodiment of this application;
FIG. 8 is a diagram of obtaining a preset configuration parameter of a seat setting item according to an embodiment of this application;
FIG. 9 is a diagram of a spatial comfort requirement of a seat according to an embodiment of this application;
FIG. 10 is a diagram of a spatial comfort requirement of human joints according to an embodiment of this application;
FIG. 11 is a first diagram of a line-of-sight safety requirement according to an embodiment of this application;
FIG. 12 is a diagram of obtaining a preset configuration parameter of a steering wheel setting item according to an embodiment of this application;
FIG. 13 is a second diagram of a line-of-sight safety requirement according to an embodiment of this application;
FIG. 14 is a diagram of a spatial safety requirement according to an embodiment of this application;
FIG. 15 is a diagram of a grip comfort requirement according to an embodiment of this application;
FIG. 16 is a diagram of adjusting a steering wheel setting item according to an embodiment of this application;
FIG. 17 is a diagram of imaging of a door handle on a rearview mirror according to an embodiment of this application;
FIG. 18 is a diagram of an imaging picture of a rearview mirror that meets a preset condition according to an embodiment of this application; and
FIG. 19 is a diagram of a structure of a chip according to an embodiment of this application.

### DESCRIPTION OF EMBODIMENTS

The following describes technical solutions in embodiments of this application with reference to accompanying drawings in embodiments of this application. In descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be in a singular form or a plural form. In addition, in descriptions of this application, "a plurality of" means two or more, unless otherwise specified. "At least one of the following items" or a similar expression thereof indicates any combination of the items, including one of the items or any combination of a plurality of the items. For example, at least one of a, b, or c may indicate a, b, c, a and b, a and c, b and c, or a, b, and c, where a, b, and c may be in a singular form or a plural form. In addition, to clearly describe the technical solutions in embodiments of this application, the terms "first", "second", and the like are used in embodiments of this application to distinguish between identical items or similar items that have basically same functions or purposes. A person skilled in the art can understand that the terms "first", "second", and the like do not limit a quantity or an execution sequence, and the terms "first", "second", and the like do not indicate a definite difference. In addition, in embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner for ease of understanding.

In addition, service scenarios described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with emergence of new service scenarios.

Currently, a cockpit of a vehicle includes a plurality of adjustable hardware devices, such as a seat, a steering wheel, a central control screen, and a rearview mirror. A user may adjust a height, an angle, a direction, and the like of a hardware device based on a driving requirement, comfort, and the like of the user.

In some adjustment solutions, a user may manually adjust an adjustment button, an adjustment apparatus, or the like corresponding to a hardware device, to adjust the hardware device. For example, a driver pulls an angle adjustment lever on a side of a seat to adjust an angle of the seat, or a driver pulls a horizontal bar under a seat to make the seat move forward or backward, to adjust a position of the seat, or a driver presses a direction adjustment button for a rearview mirror to adjust an angle of the rearview mirror. Alternatively, a hardware device may be directly manually adjusted, to change a height, an angle, and the like of the hardware device. For example, a driver lifts a target shaft of a steering wheel or lifts a steering wheel. However, all of these adjustment solutions depend on manual adjustment of a user, and there may be different adjustment manners for different vehicle models and different hardware devices. This increases operation difficulty, complexity, and the like for the user, and affects user experience.

In some other adjustment solutions, adjustment controls corresponding to some hardware devices may be displayed on a central control screen, and a user may perform an operation on a corresponding control on the central control screen without adjusting a physical button. However, these adjustment solutions also need to depend on manual adjustment of a user. In addition, the user usually cannot complete adjustment on a hardware device at a time through an operation on a control, and needs to repeatedly perform operations on the control. This also increases operation difficulty, complexity, and the like for the user, and affects user experience.

To reduce operation difficulty for a user, currently, there are also some adjustment solutions that can implement automatic adjustment on a hardware device in a cockpit. For example, when a driver sits on a driver's seat, a seating posture and the like of the driver are obtained, and a height of a steering wheel, an angle of a rearview mirror, an angle of the seat, and the like are automatically adjusted based on the seating posture of the driver. However, in these adjustment solutions, if a rearview mirror, a steering wheel, and the like are first adjusted, after a seat is subsequently adjusted, because a sitting posture, a position, and the like of a user may change, a height, an angle, and the like, obtained through the previous adjustment, of the rearview mirror and the steering wheel may become inaccurate, affecting comfort, safety, and the like of driving a vehicle by the user.

Based on the foregoing content, embodiments of this application provide a cockpit adjustment method. A seat setting item may be first adjusted based on three-dimensional spatial position information or the like obtained after a user sits on a seat, to ensure that a height, a position, an angle, and the like of the seat meet a comfort requirement and a safety requirement of the user during driving. After the seat setting item is adjusted, three-dimensional spatial information of the user in a current seat state is re-obtained. Then a component setting item of another adjustable component is further adjusted based on the re-obtained three-dimensional spatial information of the user, to ensure that a position, an angle, a height, a size, and the like of the another adjustable component can meet a comfort requirement and a safety requirement of the user during driving.

In this way, the angle, the position, the height, and the like of the seat are first adjusted, and the seat may not be re-adjusted when the another adjustable component is subsequently adjusted. Therefore, after the user sits on the adjusted seat, a posture of the user may be understood as having no change or having a slight change. In this case, the adjustment on the another adjustable component does not affect the previously adjusted seat, and the position, the angle, the height, the size, and the like of the another adjustable component can also be adjusted more accurately based on the three-dimensional spatial position information of the user that is obtained after the seat is adjusted. It can be learned that the method in embodiments of this application can prevent the user from repeatedly performing operations or adjustment on one component a plurality of times, and can also make adjustment on an adjustable component, including the seat, more accurate, to meet a user requirement and ensure user experience.

It can be understood that the seat is a driver's seat, and the adjustable component includes one or more of a steering wheel, a rearview mirror, and an imaging picture of a head-up display.

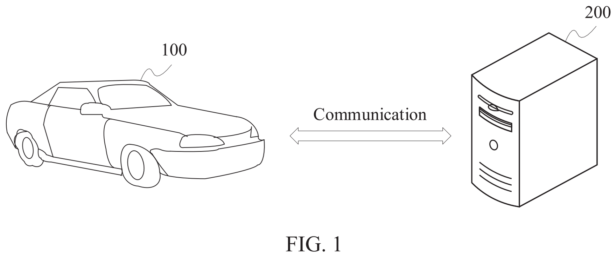

The cockpit adjustment method provided in embodiments of this application may be applied to a communication system. As shown in FIG. 1, the communication system may include a carrier 100 and a server 200, and the carrier 100 establishes communication with the server 200. The server 200 may provide related information, for example, a high-definition map or an autonomous driving scheme, for the carrier 100 during driving. The carrier 100 may provide a driving route, a recommendation for a gas station, a recommendation for a parking lot near a destination, and the like for a user based on the information provided by the server 200. The carrier 100 may further provide an autonomous driving service for the user according to the autonomous driving scheme delivered by the server 200.

In some possible application scenarios, the carrier 100 may further obtain, from the server 200, spatial coordinate information, size information, structure information, and model information of the carrier 100, information about a component mounted in the carrier 100, a component model, component size information, and the like. Therefore, the carrier 100 may determine three-dimensional spatial position information of the user in the carrier 100 based on related information of the carrier 100 and related information of the user, and then determine a posture of the user based on the three-dimensional spatial position information of the user. In addition, the carrier 100 may further determine, based on the posture of the user, related information of a component, and the like, how to adjust the component, to make a position, a height, an angle, and the like of the component meet a use requirement of the user.

The carrier 100 may include a road transportation means, a water transportation means, an air transportation means, an industrial device, an agricultural device, an entertainment device, or the like. For example, the carrier 100 may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, a toy vehicle, or the like. A type of the vehicle is not specifically limited in embodiments of this application. For another example, the carrier 100 may be a transportation means such as an aircraft or a ship.

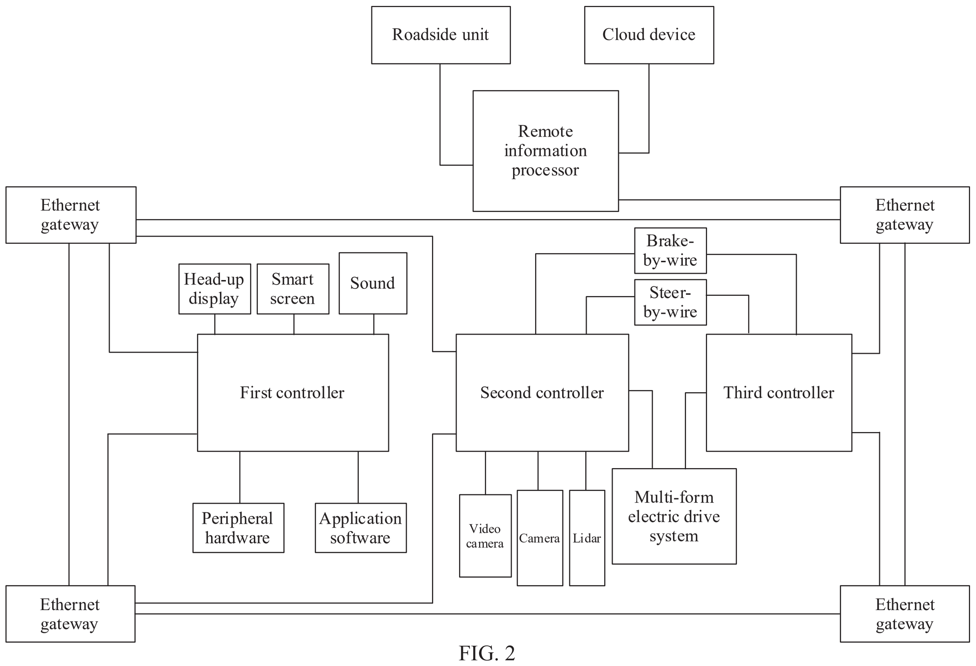

In some possible application scenarios, when the carrier 100 is a vehicle, as shown in FIG. 2, the vehicle may include a plurality of control centers, processors, controllers, or the like, for example, a first controller, a second controller, and a third controller. In some other possible application scenarios, the first controller may be a smart cockpit domain controller (cockpit domain controller, CDC), the third controller may be a vehicle dynamics control system (vehicle dynamics controller, VDC), and the second controller may be a multi-domain controller (multi-domain controller, MDC) or the like.

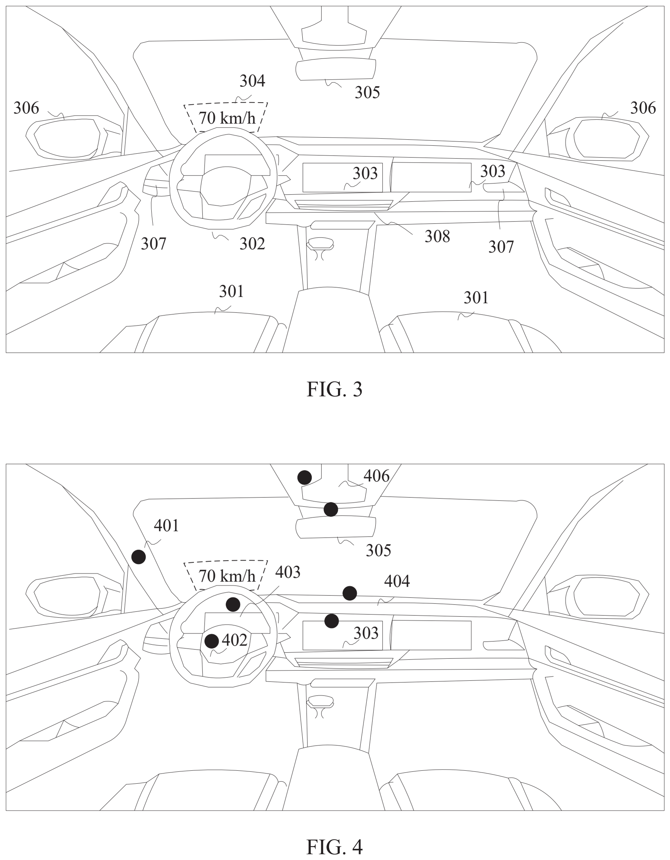

In some possible application scenarios, the first controller may be separately connected to a seat and an adjustable component, and the second controller is connected to a sensor. A cockpit of the vehicle may be adjusted based on the first controller and the second controller. The second controller may control the sensor to obtain pose information of a user in the cockpit. The first controller may obtain the pose information from the second controller, and obtain first three-dimensional spatial position information of the user in the cockpit based on the pose information after the user sits on the seat. The first controller may further determine body size information of the user based on the first three-dimensional spatial position information, and adjust a seat setting item of the seat based on the body size information. The first controller may further obtain the pose information from the second controller after the seat setting item is adjusted, obtain second three-dimensional spatial position information of the user in the cockpit, and adjust a component setting item of the adjustable component based on the second three-dimensional spatial position information. As shown in FIG. 3, the cockpit of the vehicle may include components such as a seat 301, a steering wheel 302, a central control screen (or a smart screen) 303, an imaging picture 304 (dashed lines indicate a position of the imaging picture) of a head-up display (head-up display, HUD), an inner-cockpit rearview mirror 305, an outer-cockpit rearview mirror 306, an air exhaust vent 307 of an air conditioner, and a speaker 308.

It can be learned from the foregoing content that the first controller may control and implement functions of adjustable components of the cockpit of the vehicle, such as the seat, the steering wheel, the head-up display, the rearview mirror, the smart screen, sound, peripheral hardware (such as a microphone and the speaker), and application software. The second controller may control and implement functions of sensors mounted in the vehicle, such as a video camera, a camera, a millimeter-wave radar, and a lidar. The third controller and the second controller may constitute a multi-form electric drive system in the vehicle, and implement brake-by-wire, steer-by-wire, and other functions of the vehicle.

In addition, as shown in FIG. 2, the vehicle may further communicate with a roadside unit (roadside unit, RSU) or a cloud device (for example, a server) through a remote information processor (Telematics BOX, T-BOX), a communication module, or the like.

In some other possible application scenarios, the first controller or the second controller in the vehicle may alternatively be separately used to adjust the cockpit of the vehicle.

When all of the components in FIG. 3 can be adjusted in an electronically controlled manner, if an adjustable component other than a driver's seat (referred to as a seat) is first adjusted, the another adjustable component needs to be re-adjusted after the seat is adjusted. In view of this problem, the vehicle first determines body size information of a user based on three-dimensional spatial position information of the user after the user sits on the seat, and adjusts an angle, a position, a height, and the like of the seat based on the body size information of the user, to make the user remain in a comfortable posture, without affecting safe driving of the user. After adjusting the seat, the vehicle re-obtains three-dimensional spatial information of the user in a current state based on a current angle, position, height, and the like of the seat. Because a posture and the like of the user change due to the adjustment on the seat, the re-obtained three-dimensional spatial position information may differ from the three-dimensional spatial position information obtained before the seat is adjusted. Then the vehicle continues to adjust, based on the re-obtained three-dimensional spatial information of the user, another adjustable component, for example, the steering wheel, the outer-cockpit rearview mirror (referred to as a rearview mirror), or the imaging picture of the HUD, to ensure that a position, an angle, a height, a size, and the like of the another adjustable component can meet a comfort requirement and a safety requirement of the user during driving. In this way, the angle, the position, the height, and the like of the seat are first adjusted, and the seat may not be re-adjusted when the another adjustable component is subsequently adjusted. Therefore, after the user sits on the adjusted seat, a posture of the user may be understood as having no change or having a slight change. In this case, the adjustment on the another adjustable component does not affect the previously adjusted seat, and the position, the angle, the height, the size, and the like of the another adjustable component can also be adjusted more accurately based on the three-dimensional spatial position information of the user that is obtained after the seat is adjusted.

In some possible application scenarios, the vehicle may detect, through a sensor or the like, whether the user sits on the seat. The sensor includes a camera disposed in the cockpit, a pressure sensor disposed under the seat, and the like. When the vehicle detects, through the sensor, that the user sits on the seat, the vehicle may re-obtain current pose information of the user through a sensor such as a camera or a radar. The camera for obtaining the pose information may include an infrared (infrared, IR) camera, a time-of-flight (time-of-flight, TOF) camera based on a TOF technology, an RGB camera based on a red-green-blue (red-green-blue, RGB) color pattern, and the like. The radar for obtaining the pose information may be a millimeter-wave radar. The pose information may include a human body image of the user, point cloud information and radar imaging information of the user in three-dimensional space of the cockpit, and the like.

At least one sensor may be disposed in the cockpit. For example, as shown in FIG. 4, sensors may be disposed on an A-pillar 401 of the vehicle, on a steering pillar 402 of the steering wheel, above a dashboard 403, above a center console 404, above the inner-cockpit rearview mirror 305, near a top-side sunglass case 406, and on the central control screen 303. Black dots in the figure may represent the sensors.

The vehicle may determine a posture of the user in the cockpit based on the obtained pose information, and determine three-dimensional spatial position information of the user in the cockpit based on the current posture of the user. Correspondingly, after adjusting the seat, the vehicle may still obtain, through the sensor, pose information of the user after the seat is adjusted, and determine, based on the pose information, a posture of the user in the cockpit after the seat is adjusted, current three-dimensional spatial position information of the user in the cockpit, and the like.

After adjusting the seat, the vehicle may continue to adjust one or more of other adjustable components, to implement linkage adjustment on the seat and the other adjustable components. After the seat is adjusted, a sequence of adjusting the other adjustable components may include but is not limited to: adjusting the steering wheel, or adjusting the imaging picture of the HUD, or adjusting the rearview mirror; adjusting the steering wheel and then adjusting the imaging picture of the HUD, or adjusting the steering wheel and then adjusting the rearview mirror, or adjusting the imaging picture of the HUD and then adjusting the steering wheel; adjusting the imaging picture of the HUD and then adjusting the rearview mirror, or adjusting the rearview mirror and then adjusting the steering wheel, or adjusting the rearview mirror and then adjusting the imaging picture of the HUD; or adjusting the steering wheel and then adjusting the imaging picture of the HUD and then adjusting the rearview mirror.

It can be understood that, if linkage adjustment is further performed on two or more other adjustable components after the seat is adjusted, the adjustable components may be adjusted in sequence or simultaneously. This is not specifically limited in embodiments of this application.

In some possible application scenarios, after the vehicle adjusts the adjustable components including the seat, the user may continue to perform more fine-grained manual adjustment on each adjustable component, to ensure that a height, a position, an angle, a width, and the like of the adjustable component better meet a comfort requirement, a safety requirement, and the like of the user. For example, after the vehicle adjusts the angle, the position, and the height of the seat, the user may manually re-adjust the angle of the seat; or after the vehicle adjusts an angle and a height of the steering wheel, the user may manually re-adjust the height of the steering wheel.

When a same user uses the vehicle a plurality of times, a body size, a posture, and the like may not greatly change. Therefore, to ensure driving experience of the user, in some possible application scenarios, after adjusting an adjustable component, the vehicle may associate current component parameters such as a position, a height, an angle, and a width with the current user. In this way, when the same user drives the vehicle again, the vehicle can directly adjust each adjustable component based on the component parameters associated with the user, and the like. This omits a process of linkage re-adjustment on a plurality of adjustable components and saves time, and can also make a position, a height, an angle, a width, and the like of each adjustable component meet a comfort requirement, a safety requirement, and the like of the user.

In some other possible application scenarios, before driving the vehicle, the user may log in to a management system of the vehicle by entering an account, scanning a face, scanning a code, or the like, so that the vehicle confirms identity information of the user. Upon the first login, the vehicle may create an account for the current user. After the linkage adjustment, the vehicle associates an adjusted component parameter with the current login user. Upon a non-first login, the vehicle may obtain a stored component parameter associated with the current user, and the like.

In some possible application scenarios, some of the components shown in FIG. 3 can be adjusted in an electronically controlled manner, and some of the components cannot be adjusted in an electronically controlled manner. In this case, in the cockpit adjustment method in embodiments of this application, linkage adjustment may be performed on the components that can be adjusted in an electronically controlled manner, and the components that cannot be adjusted in an electronically controlled manner are skipped. For example, an imaging picture of an HUD in a vehicle cannot be adjusted in an electronically controlled manner. When a linkage adjustment process proceeds to the component, the vehicle may prompt a user to perform manual adjustment. When the user completes manual adjustment or skips an adjustment step, the vehicle may continue to automatically adjust a next component.

During implementation of the cockpit adjustment method in embodiments of this application based on the foregoing content, a vehicle may first adjust an angle, a position, a height, and the like of a seat based on three-dimensional spatial position information and the like obtained after a user sits on the seat, to ensure that the height, the position, the angle, and the like of the seat meet a comfort requirement and a safety requirement of the user during driving. After adjusting the seat, the vehicle re-obtains three-dimensional spatial information of the user in a current state based on a current angle, position, height, and the like of the seat. Then the vehicle continues to adjust another adjustable component based on the re-obtained three-dimensional spatial information of the user, to ensure that a position, an angle, a height, a size, and the like of the another adjustable component can meet a comfort requirement and a safety requirement of the user during driving. In this way, the angle, the position, the height, and the like of the seat are first adjusted, and the seat may not be re-adjusted when the another adjustable component is subsequently adjusted. Therefore, after the user sits on the adjusted seat, a posture of the user may be understood as having no change or having a slight change. In this case, the adjustment on the another adjustable component does not affect the previously adjusted seat, and the position, the angle, the height, the size, and the like of the another adjustable component can also be adjusted more accurately based on the three-dimensional spatial position information of the user that is obtained after the seat is adjusted. It can be learned that the method in embodiments of this application can prevent the user from repeatedly performing operations or adjustment on one component a plurality of times, and can also make adjustment on an adjustable component, including the seat, more accurate, to meet a user requirement and ensure user experience.

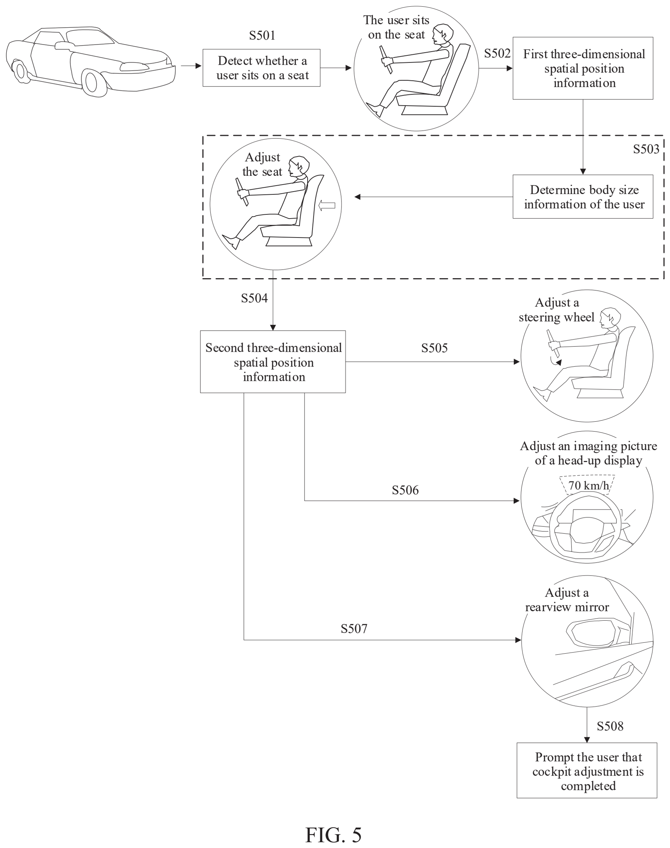

The following describes the cockpit adjustment method in embodiments of this application by using an example in which a vehicle sequentially adjusts a seat, a steering wheel, an imaging picture of an HUD, and a rearview mirror. As shown in FIG. 5, the method may include the following S501 to S508.

S501: The vehicle detects whether a user sits on the seat. If the user sits on the seat, S502 is performed.

In some embodiments, the vehicle may detect, through a sensor mounted in a cockpit of the vehicle, whether the user sits on the seat. The sensor may be a camera, a pressure sensor, or the like. For example, when the user sits on the seat, pressure is applied to the seat, and a pressure sensor mounted under the seat detects the pressure. In some possible application scenarios, some items or a kid are/is also placed on the seat. Therefore, to eliminate impact of the items or the kid, when a pressure value detected by the pressure sensor is greater than or equal to a preset pressure value, the vehicle may determine that the user sits on the seat.

For another example, the vehicle may capture an image of the seat through a camera in the cockpit, and determine, based on content in the image, whether the user sits on the seat. When the user sits on the seat, the image captured by the camera includes the seat and the user, and the vehicle may determine that the user sits on the seat.

S502: After the user sits on the seat, the vehicle obtains first three-dimensional spatial position information of the user in the cockpit.

In some embodiments, after the user sits on the seat, the vehicle may display first prompt information. The first prompt information is configured for reminding the user to adjust a sitting posture, to ensure that accurate information about the user in the cockpit can be obtained. In addition, a manner of displaying the first prompt information may include displaying the first prompt information or broadcasting the first prompt information.

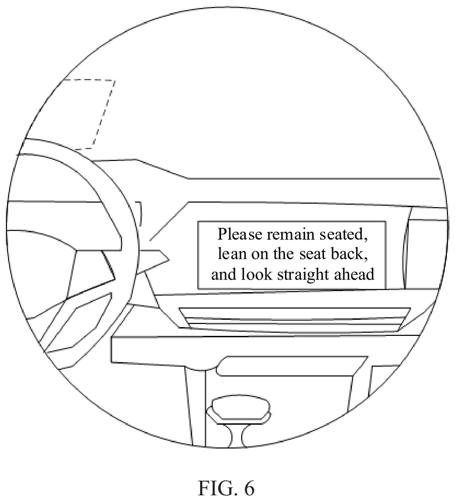

In some possible application scenarios, the vehicle may display the first prompt information on a display device, for example, a central control screen, in the cockpit. For example, as shown in FIG. 6, the first prompt information may be "Please remain seated, lean back, and look straight ahead". In some other possible application scenarios, the vehicle may alternatively play the first prompt information, for example, "Please remain seated, lean back, and look straight ahead, and we are about to adjust the seat", through an audio device or the like in the cockpit.

The vehicle obtains pose information of the user in the cockpit after the first prompt information is displayed for preset duration. The pose information includes one or more of a human body image, point cloud information, and radar imaging information of the user.

In some possible application scenarios, the vehicle may obtain the human body image of the user in the cockpit through a camera in the cockpit, for example, an infrared camera, a TOF camera, or an RGB-based camera. Alternatively, the vehicle may continue to obtain point cloud information of the user in three-dimensional space of the cockpit, and the like based on the human body image. In some other possible application scenarios, the vehicle may alternatively obtain radar imaging information of the user in three-dimensional space of the cockpit, and the like through a millimeter-wave radar or the like. In some other possible application scenarios, the pose information obtained by the vehicle may be head information of the user, for example, a head image, or point cloud information or radar imaging information of the head in the three-dimensional space; or may be upper-body information of the user, for example, an upper-body image, or point cloud information or radar imaging information of the upper body in the three-dimensional space.

Because the user spends specific time in adjusting a posture after receiving the first prompt information, in this embodiment, the pose information is obtained only after the first prompt information is displayed for the preset duration. In this way, sufficient time is reserved for the user to adjust the posture, to ensure that the posture of the user meets a requirement of the first prompt information or ensure that the posture of the user is standard, and ensure that the obtained pose information is more accurate.

After obtaining the pose information, the vehicle continues to determine the first three-dimensional spatial position information of the user in a spatial coordinate system of the cockpit based on the pose information. It can be understood that the vehicle may determine the first three-dimensional spatial position information based on a plurality of types of pose information. For example, the first three-dimensional spatial position information is determined based on the human body image, the point cloud information, and the radar imaging information.

In some possible application scenarios, the seat in the vehicle may be pre-modeled. A seat model has corresponding three-dimensional spatial position information in cockpit space. Subsequently, the first three-dimensional spatial position information of the user in the spatial coordinate system of the cockpit is determined based on the pose information, a current setting item parameter of the seat model, and the like. A position, an angle, a height, and the like of the seat in real space may be simulated by using the seat model.

It can be understood that, before the user enters the cockpit, a seat setting item of the cockpit is not necessarily an initial parameter. For example, a configuration of a previous user is retained for a setting item parameter of the seat after the previous user finishes driving the vehicle, or a previous configuration is retained for a setting item parameter of the seat after previous driving of the vehicle is finished. In this case, the vehicle can more accurately determine current three-dimensional spatial position information of the user based on current pose information and current three-dimensional spatial position information of the seat model.

In some other possible application scenarios, the vehicle may determine the first three-dimensional spatial position information of the user based on the pose information and a human body posture algorithm, a human body reconstruction algorithm, or the like.

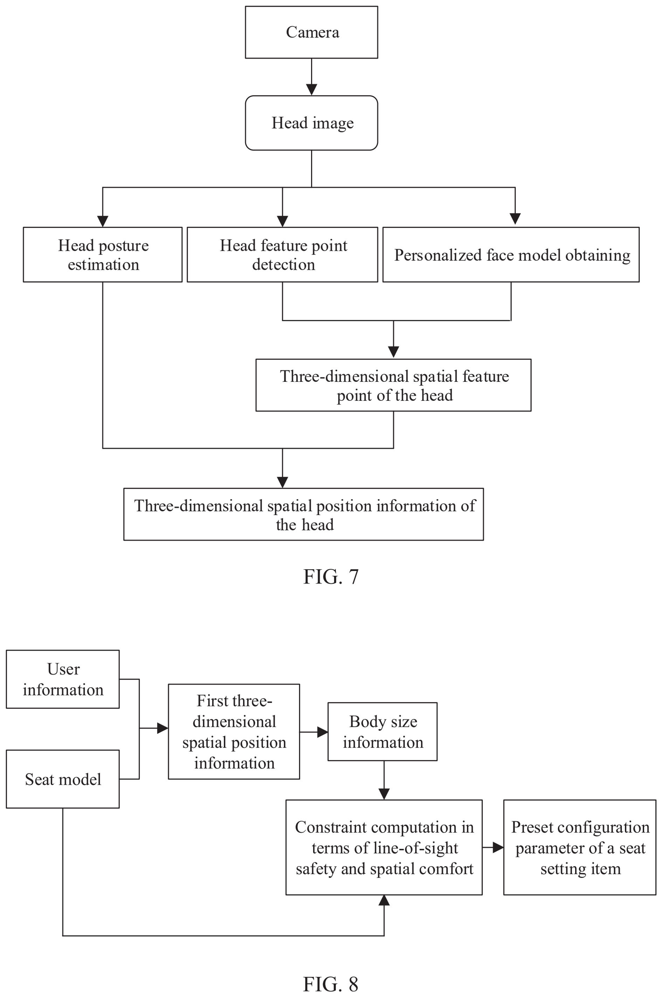

For example, if the pose information is the head information of the user, as shown in FIG. 7, the vehicle may perform head detection based on the head image obtained by the camera. During head detection, head posture estimation, head feature point detection, and personalized face model obtaining are separately performed. Then a three-dimensional spatial feature point of the head of the user is obtained based on a detected two-dimensional spatial feature point and a personalized face model. Finally, three-dimensional spatial position information of the head of the user is determined based on a head posture, the three-dimensional spatial feature point, and the like.

It can be understood that, if the pose information is the upper-body information of the user, three-dimensional spatial position information of the upper body of the user may alternatively be determined in the foregoing manner. In addition, the foregoing human body posture algorithm is merely an example, and does not constitute a limitation on a manner of determining three-dimensional spatial position information of the user in this embodiment of this application.

It is difficult to accurately obtain a posture, pose information, or the like of the user based on two-dimensional (2D) information of the user in the human body image. Therefore, in this embodiment of this application, three-dimensional (3D) spatial position information of the user in the cockpit may be determined. The 3D spatial position information includes information of three dimensions, and the user represented by the information is three-dimensional. The seat and other adjustable components can be subsequently adjusted more accurately based on the three-dimensional spatial position information.

S503: The vehicle determines body size information of the user based on the first three-dimensional spatial position information of the user, and adjusts a seat setting item of the seat based on the body size information.

The seat setting item includes one or more of an angle, a position, and a height of the seat, and the body size information of the user may include an eye position, a height, a contour, a weight, an arm length, a leg length, and the like of the user.

In some embodiments, when adjusting the seat setting item of the seat, the vehicle may obtain a preset configuration parameter, matching the body size information, of the seat setting item. Then the vehicle adjusts one or more of the angle, the position, and the height of the seat based on the preset configuration parameter of the seat setting item.

The preset configuration parameter may be preset, or may be obtained by performing constraint computation on the body size information of the user in terms of line-of- sight safety and spatial comfort. For example, as shown in FIG. 8, after determining the first three-dimensional spatial information based on the pose information, the seat model, and the like, the vehicle determines the body size information of the user based on the first three-dimensional spatial information, and performs constraint computation in terms of line-of-sight safety and spatial comfort based on the seat model and the eye position, the leg length, the arm length, the height, and the like in the body size information, to obtain a preset configuration parameter, meeting line-of-sight safety and spatial comfort requirements of the current user, of the seat setting item.

In some possible application scenarios, a seat adjustment model may alternatively be pre-trained, and an adjustment parameter of the seat setting item is determined and the seat setting item is adjusted based on the seat adjustment model.

In some possible application scenarios, the vehicle may perform the foregoing constraint computation based on the following line-of-sight safety and spatial comfort requirements and the like.

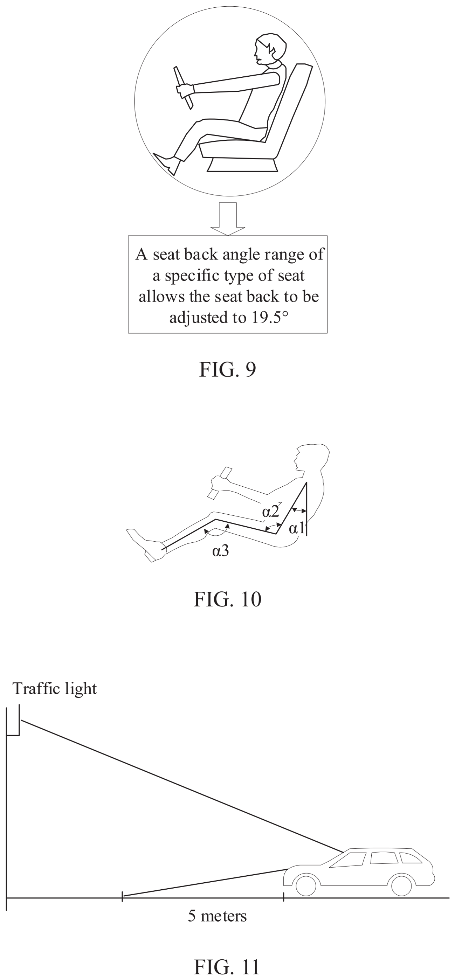

The spatial comfort requirement may include a requirement for a seat back angle range, a requirement for a human joint angle range, and the like. For example, as shown in FIG. 9, for a specific type of seat, according to the spatial comfort requirement, a corresponding seat back angle range may be 18° to 20°. During actual adjustment, a seat back may be adjusted to 19.5°. For another example, as shown in FIG. 10, human joint angles that affect user comfort include α1, α2, and α3 shown in FIG. 10. A range, meeting the spatial comfort requirement, of the angle α1 may be 20° to 30°, 5° to 34°, or the like. A range of the angle α2 may be 95° to 120°, 103° to 131°, 78° to 118°, or the like. A range of the angle α3 may be 95° to 135°, 120° to 152°, 93° to 137°, or the like.

In addition, the line-of-sight safety requirement may include an upper angle-of-view requirement, a lower angle-of-view requirement, and the like. For example, as shown in FIG. 11, the upper angle-of-view requirement is as follows: It needs to be ensured that the user can see, from a driver's seat, a traffic light at a distance of 12 meters away from the vehicle and at a height of 5 meters and/or a windshield crossbar. The lower angle-of-view requirement is as follows: It needs to be ensured that the user can see, from the driver's seat, a range within 5 meters on the ground in front of the vehicle, and an angular velocity ω ≤ 2 rad/s.

The preset configuration parameter determined according to the line-of-sight safety and spatial comfort requirements and the like may include a height parameter, a position parameter, an angle parameter, and the like of the seat. The seat setting item is adjusted based on the preset configuration parameter. For example, a height of the seat is increased by 10 centimeters, the seat is moved forward by 10 centimeters, or a seat back is tilted backward by 10°. After the seat is adjusted based on the preset configuration parameter, the height, the position, the angle, and the like of the seat can better match a current posture or body size of the user, and also meet a driving habit of the user, to ensure driving safety and comfort.

S504: After adjusting the seat setting item, the vehicle re-obtains second three-dimensional spatial position information of the user in the cockpit.

It can be understood that, after the seat is adjusted, a posture and the like of the user change compared with a posture and the like obtained before the adjustment. To more accurately adjust another adjustable component, in this embodiment of this application, three-dimensional spatial position information of the user may be re-obtained after the seat is adjusted. In addition, in a subsequent process of adjusting the another adjustable component, a component setting item is further adjusted by using the re-obtained three-dimensional spatial position information, to ensure that a height, a position, an angle, a width, and the like of the another adjustable component also meet a safety requirement and a comfort requirement.

Automatic adjustment performed by the vehicle on the seat may not meet a requirement, a driving habit, or the like of the user. Therefore, in some embodiments, after adjusting the seat setting item, the vehicle may display second prompt information, to remind the user that the user can manually adjust the seat setting item of the seat. A manner of displaying the second prompt information may include displaying the second prompt information or broadcasting the second prompt information.

In some possible application scenarios, the vehicle may display the second prompt information, for example, "Seat adjustment is completed, and you can manually perform fine-grained adjustment", on a display device, for example, the central control screen, in the cockpit. In some other possible application scenarios, the vehicle may alternatively play the second prompt information, for example, "Automatic seat adjustment is completed, and you can continue to perform manual adjustment", through the audio device or the like in the cockpit.

After displaying the second prompt information, the vehicle receives a first adjustment operation performed by the user on the seat setting item.

After receiving the second prompt information, the user may perform the first adjustment operation on the seat setting item based on a requirement, a driving habit, and the like of the user. It can be understood that the seat setting item includes one or more of an angle, a position, and a height. The first adjustment operation of the user may be an operation on a setting item alone, or may be a linkage operation on two or more setting items.

The vehicle adjusts a corresponding seat setting item in response to the first adjustment operation, and obtains current second three-dimensional spatial position information of the user in the cockpit.

If the first adjustment operation includes a linkage operation on a plurality of setting items, the vehicle may sequentially adjust the setting items in response to an operation on each setting item.

The first adjustment operation may be a linkage operation on several setting items. Therefore, to avoid a case that the vehicle starts to obtain three-dimensional spatial position information when the user has not completed the operation, or to avoid a case that the vehicle continuously waits because the vehicle does not know whether the first adjustment operation of the user has ended, in some possible application scenarios, the vehicle may prompt the user to complete the first adjustment operation within preset duration while displaying the second prompt information. If the vehicle receives the first adjustment operation of the user within the preset duration after the second prompt information is displayed, when timing of the preset duration ends, the vehicle obtains current second three-dimensional spatial position information of the user in the cockpit based on the seat that has currently undergone the first adjustment operation. If the vehicle does not receive the first adjustment operation of the user within the preset duration after the second prompt information is displayed, it indicates that the user does not need to perform fine-grained adjustment on the seat. In this case, the vehicle does not respond.

In some possible application scenarios, when obtaining the second three-dimensional spatial position information, the vehicle may alternatively obtain pose information of the user in a current posture in the cockpit based on a sensor or the like, and determine current second three-dimensional spatial position information of the user in the spatial coordinate system of the cockpit based on the current pose information. For details, refer to the foregoing content of determining the first three-dimensional spatial position information. Details are not described herein again.

S505: The vehicle adjusts a height and an angle of the steering wheel based on the second three-dimensional spatial position information.

After the seat is adjusted, a height and the like of the user seated on the seat also change. In this case, it may be uncomfortable or unsafe to use the steering wheel. Therefore, after the seat is adjusted, the height and the angle of the steering wheel may be further adjusted, to ensure that use of the steering wheel meets a safety requirement and a comfort requirement.

In some embodiments, the vehicle may first determine an eye position, an upper-body position, and an arm length of the user based on the second three-dimensional spatial position information; then obtain a preset configuration parameter of a steering wheel setting item, where the preset configuration parameter matches the eye position, the upper-body position, and the arm length; and finally, adjust the height and the angle of the steering wheel based on the preset configuration parameter of the steering wheel setting item.

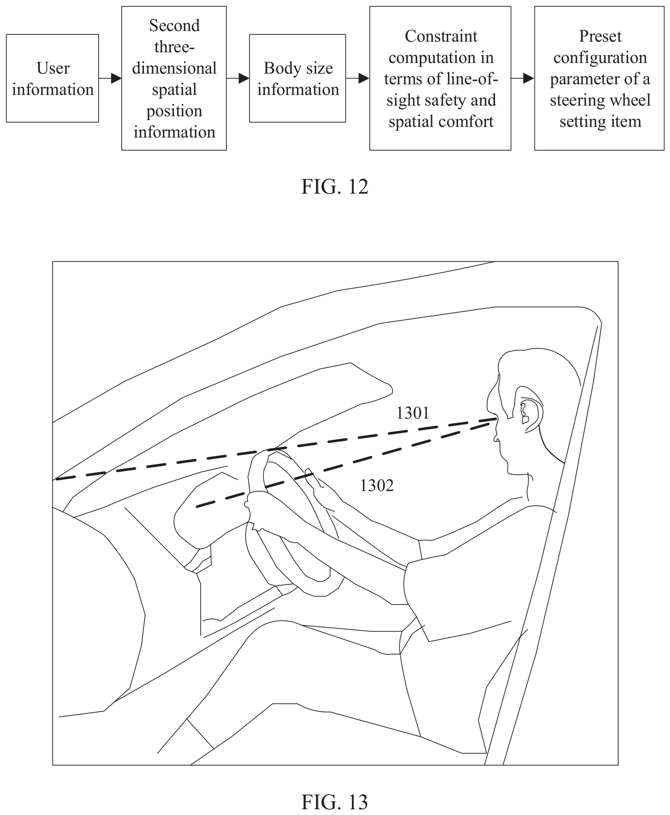

The preset configuration parameter may be preset, or may be obtained by performing constraint computation on the eye position, the upper-body position, and the arm length of the user in terms of line-of-sight safety and spatial comfort. For example, as shown in FIG. 12, the vehicle determines body size information of the user based on the second three-dimensional spatial information, and performs constraint computation in terms of line-of-sight safety and spatial comfort based on the eye position and upper-limb sizes such as the arm length and the upper-body position in the body size information, to obtain a preset configuration parameter, meeting line-of-sight safety and spatial comfort requirements of the current user, of the steering wheel setting item.

In some possible application scenarios, a steering wheel adjustment model may alternatively be pre-trained, and an adjustment parameter of the steering wheel setting item is determined and the steering wheel setting item is adjusted based on the steering wheel adjustment model.

In some possible application scenarios, the vehicle may perform the foregoing constraint computation based on the following line-of-sight safety and spatial comfort requirements and the like.

The line-of-sight safety requirement may be determined based on content shown in FIG. 13. The line-of-sight safety requirement is as follows: It needs to be ensured that a height of an upper edge of the steering wheel is not higher than a connection line 1301 between eyes of the user and a front edge of a vehicle front, to ensure that the upper edge of the steering wheel does not block a line of sight from the user to a road surface. It further needs to be ensured that the user can see complete dashboard content through a hollow part of an upper-half part of the steering wheel. In this case, the line of sight of the user is represented by a dashed line 1302 in the figure.

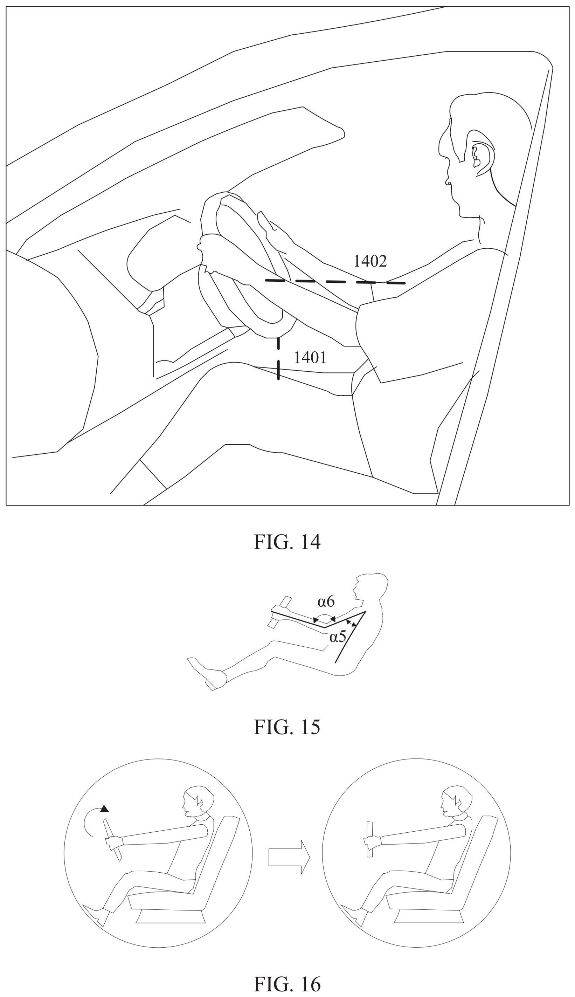

In addition, the spatial comfort requirement may include a spatial safety requirement and a grip comfort requirement. As shown in FIG. 14, the spatial safety requirement is as follows: It needs to be ensured that a specific distance, for example, 10 to 12 centimeters, is kept between a lower edge of the steering wheel and a body of the user. If the lower edge of the steering wheel is excessively close to the user, when the vehicle encounters a collision, the steering wheel may cause injury to the user. If the lower edge of the steering wheel is excessively far away from the user, driving control of the user is affected. For example, a length of a dashed line 1401 in the figure may represent the distance between the lower edge of the steering wheel and the body of the user. In addition, it further needs to be ensured that a distance between the steering wheel and a chest of the user is not less than a preset distance, for example, 25 centimeters or 30 centimeters. If the distance is less than the preset distance, an airbag system of the vehicle cannot protect the user. For example, a length of a dashed line 1402 in the figure may represent the distance between the steering wheel and the chest of the user.

As shown in FIG. 15, the grip comfort requirement is as follows: It needs to be ensured that, when the user stretches out one hand to the top of the steering wheel in a current sitting posture state, the arm remains in a comfortable state in which the arm is basically straightened and only slightly bends. Human joint angles α5 and α6 of the user that can meet the comfort state also need to meet a preset angle range requirement. For example, a range of α5 may be 0 to 50° or 5° to 45°, and a range of α6 may be 80° to 170°, 86° to 144°, or 77° to 155°.

The preset configuration parameter determined according to the line-of-sight safety and spatial comfort requirements and the like may include a height parameter, an angle parameter, and the like of the steering wheel. The steering wheel setting item is adjusted based on the preset configuration parameter. For example, a height of the steering wheel is increased by 10 centimeters, or the steering wheel is rotated by 10°, as shown in FIG. 16. After the steering wheel is adjusted based on the preset configuration parameter, the height, the angle, and the like of the steering wheel can better match a current posture of the user, and also meet a driving habit of the user, to ensure driving safety and comfort.

S506: The vehicle adjusts a position and a size of the imaging picture of the HUD based on the second three-dimensional spatial position information.

After the seat is adjusted, the height and the like of the user seated on the seat also change. In this case, the position of the imaging picture of the HUD may affect safe driving of the user, or the position of the imaging picture of the HUD may cause the user to be unable to comfortably watch the imaging picture of the HUD. Therefore, after the seat is adjusted or the steering wheel is adjusted, the position and the size of the imaging picture of the HUD may be further adjusted, to ensure that the position and the size of the imaging picture of the HUD meet a safety requirement and a comfort requirement.

In some embodiments, the vehicle may determine an eye position of the user based on the second three-dimensional spatial position information, and then obtain a preset configuration parameter, matching the eye position, of the imaging picture of the HUD. Then the vehicle adjusts the position and the size of the imaging picture of the HUD based on the preset configuration parameter of the imaging picture of the HUD.

The preset configuration parameter may be preset, or may be obtained by performing constraint computation on the eye position and the like of the user in terms of line-of-sight safety and spatial comfort.

In some possible application scenarios, the vehicle may perform the foregoing constraint computation based on the following line-of-sight safety and spatial comfort requirements and the like.

The line-of-sight safety requirement is as follows: It needs to be ensured that the position of the imaging picture of the HUD does not block a road surface and an environmental field of view in front of the user, and the size of the imaging picture of the HUD is determined based on a distance between the eyes of the user and the imaging picture of the HUD. For example, a longer distance between the eyes and the imaging picture of the HUD indicates a larger size of the imaging picture of the HUD.

In addition, the spatial comfort requirement may include a comfort requirement for a head rotation angle. To be specific, it is ensured that, when the user turns the head to view the imaging picture of the HUD, an angle at which the user turns the head left or right does not exceed an angle range of the comfort requirement.

The preset configuration parameter determined according to the line-of-sight safety and spatial comfort requirements and the like may include a position parameter, a height parameter, a width parameter, and the like of the imaging picture of the HUD. An HUD imaging picture setting item is adjusted based on the preset configuration parameter. For example, a height of the position of the imaging picture of the HUD is increased by 10 centimeters, or zoom-in is performed on the imaging picture of the HUD by 1.1 times. After the imaging picture of the HUD is adjusted based on the preset configuration parameter, the position, the size, and the like of the imaging picture of the HUD can better match a current posture of the user, and also meet a driving habit of the user, to ensure driving safety and comfort.

S507: The vehicle adjusts an angle of the rearview mirror based on the second three-dimensional spatial position information.

After the seat is adjusted, the height and the like of the user seated on the seat also change. In this case, an angle of the rearview mirror may not ensure that the user can view, in a current posture, environmental content that meets a line-of-sight safety requirement. Therefore, after the seat is adjusted or the steering wheel or the imaging picture of the HUD is adjusted, the angle of the rearview mirror may be further adjusted, to ensure that the angle of the rearview mirror meets the line-of-sight safety requirement.

In some embodiments, the vehicle determines an eye position of the user based on the second three-dimensional spatial position information, determines a preset configuration parameter of the rearview mirror based on the eye position, vehicle information, and the like, and then adjusts the angle of the rearview mirror based on the preset configuration parameter of the rearview mirror, to ensure that an imaging picture seen by the user from the rearview mirror in a current posture meets a preset condition, and therefore ensure safe driving of the user. The vehicle information includes a vehicle size (for example, a length, a width, or a height), a door handle position, a wheel position, spatial position information of the vehicle, and the like.

In some possible application scenarios, because the rearview mirror is a convex mirror, the vehicle may determine the preset configuration parameter of the rearview mirror and adjust the angle of the rearview mirror based on the eye position and the like according to an imaging principle of the convex mirror.

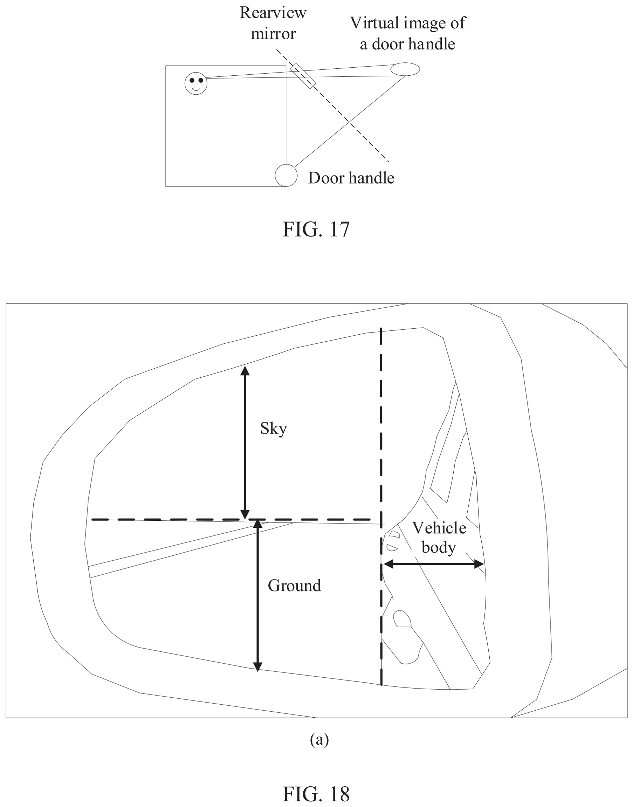

For example, a door handle is imaged in the rearview mirror. As shown in FIG. 17, the user wants to view a right rear door handle in the rearview mirror, and the angle of the rearview mirror needs to be adjusted to make a virtual image of the door handle in the rearview mirror visible to the user.

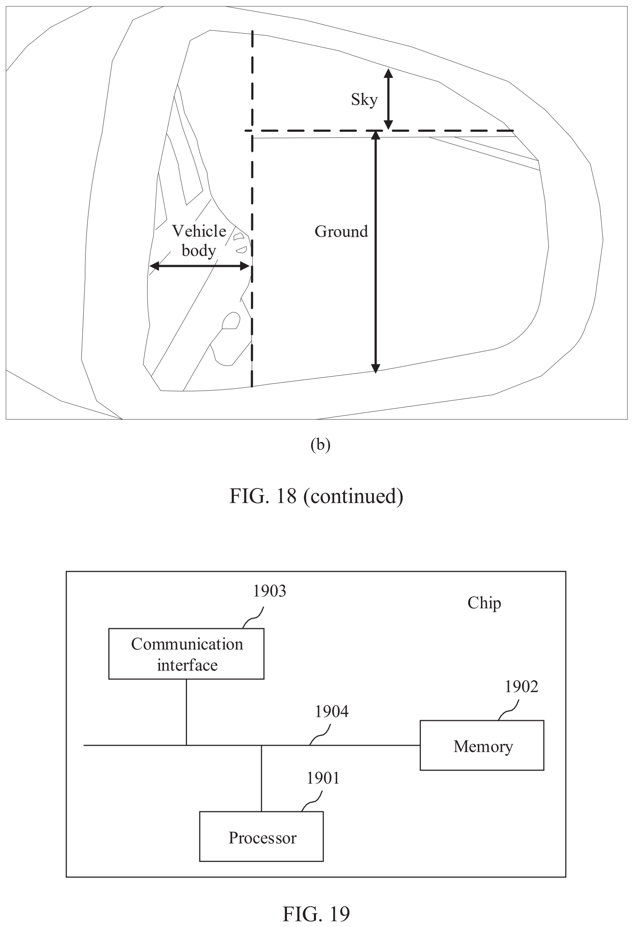

That an imaging picture seen by the user from the rearview mirror in a current posture meets a preset condition includes that an imaging picture of a left rearview mirror meets a first preset condition and an imaging picture of a right rearview mirror meets a second preset condition. In some possible application scenarios, as shown in (a) in FIG. 18, the first preset condition may include that a vehicle body, the sky, and the ground in the imaging picture each occupy a part of the imaging picture. For example, the vehicle body occupies 1/4 of the imaging picture, the sky occupies 1/2 of a picture other than the vehicle body in the imaging picture, and the ground occupies 1/2 of the picture other than the vehicle body in the imaging picture. In some other possible application scenarios, as shown in (b) in FIG. 18, the second preset condition may alternatively include that a vehicle body, the sky, and the ground in the imaging picture each occupy a part of the imaging picture. For example, the vehicle body occupies 1/4 of the imaging picture, the sky occupies 1/4 of a picture other than the vehicle body in the imaging picture, and the ground occupies 3/4 of the picture other than the vehicle body in the imaging picture.

The preset configuration parameter determined according to the line-of-sight safety requirement and the like may include an angle parameter and the like of the rearview mirror. A rearview mirror setting item is adjusted based on the preset configuration parameter. For example, the right rearview mirror is adjusted in a direction toward the user by 20°, and the left rearview mirror is adjusted in a direction toward the user by 10°. After the rearview mirror is adjusted based on the preset configuration parameter, the angle and the like of the rearview mirror can better match a current posture of the user, and also meet a driving habit of the user, to ensure driving safety and comfort.

In addition, it can be understood that the foregoing adjustment on the rearview mirror is adjustment on a rearview mirror outside the cockpit (namely, an outer-cockpit rearview mirror). The outer-cockpit rearview mirror includes the left rearview mirror and the right rearview mirror. The foregoing adjustment on the rearview mirror may be adjustment on either of the left rearview mirror and the right rearview mirror, or may be adjustment on all rearview mirrors.

S508: The vehicle prompts the user that cockpit adjustment is completed.

In some embodiments, a manner of indicating, by the vehicle, that the cockpit adjustment is completed may include displaying prompt information, broadcasting prompt voice, and/or the like. In some possible application scenarios, the vehicle may display the prompt information, for example, "Cockpit adjustment is completed", on the central control screen in the cockpit. In some other possible application scenarios, the vehicle may alternatively play voice prompt information, for example, "Cockpit adjustment is completed, and you are ready to go", through the audio device or the like in the cockpit.

It can be learned from the foregoing content that, in the cockpit adjustment method provided in this embodiment of this application, the vehicle may first adjust the angle, the position, the height, and the like of the seat based on three-dimensional spatial position information and the like obtained after the user sits on the seat, to ensure that the height, the position, the angle, and the like of the seat meet a comfort requirement and a safety requirement of the user during driving. After adjusting the seat, the vehicle re-obtains three-dimensional spatial information of the user in a current state based on a current angle, position, height, and the like of the seat. Then the vehicle continues to adjust another adjustable component based on the re-obtained three-dimensional spatial information of the user, to ensure that a position, an angle, a height, a size, and the like of the another adjustable component can meet a comfort requirement and a safety requirement of the user during driving. In this way, the angle, the position, the height, and the like of the seat are first adjusted, and the seat may not be re-adjusted when the another adjustable component is subsequently adjusted. Therefore, after the user sits on the adjusted seat, a posture of the user may be understood as having no change or having a slight change. In this case, the adjustment on the another adjustable component does not affect the previously adjusted seat, and the position, the angle, the height, the size, and the like of the another adjustable component can also be adjusted more accurately based on the three-dimensional spatial position information of the user that is obtained after the seat is adjusted. It can be learned that the method in this embodiment of this application can prevent the user from repeatedly performing operations or adjustment on one component a plurality of times, and can also make adjustment on an adjustable component, including the seat, more accurate, to meet a user requirement and ensure user experience.

In the foregoing embodiment, after adjusting the seat setting item, the vehicle may display the second prompt information to the user, to remind the user to perform more refine-grained adjustment on the seat. Based on this, in some embodiments, after adjusting a component setting item of an adjustable component other than the seat, the vehicle may alternatively display third prompt information to remind the user to manually adjust the component setting item of the adjustable component.

In some possible application scenarios, after the seat is adjusted, one other adjustable component may be adjusted alone, or linkage adjustment may be performed on a plurality of other adjustable components. Therefore, the vehicle may display the third prompt information after adjusting one other adjustable component alone, or may display the third prompt information after adjusting each adjustable component during linkage.

For example, a sequence of cockpit adjustment for the vehicle is as follows: the seat - the steering wheel. After adjusting the steering wheel, the vehicle may display prompt content, for example, "Steering wheel adjustment is completed, and you can manually perform fine-grained adjustment". For another example, a sequence of cockpit adjustment for the vehicle is as follows: the seat - the steering wheel - the rearview mirror. After adjusting the steering wheel, the vehicle may display prompt content, for example, "Steering wheel adjustment is completed, and you can manually perform fine-grained adjustment". After adjusting the rearview mirror, the vehicle may also display prompt content, for example, "Rearview mirror adjustment is completed, and you can manually perform fine-grained adjustment".

In some other possible application scenarios, a manner of displaying the third prompt information by the vehicle may include displaying prompt information and/or broadcasting prompt information. For details, refer to the manners of displaying the first prompt information and the second prompt information in the foregoing embodiment. Details are not described herein again.

After receiving the third prompt information, the user may perform a second adjustment operation on the component setting item based on a requirement, a driving habit, and the like of the user. It can be understood that the component setting item includes one or more of an angle, a position, a height, and a size. The second adjustment operation of the user may be an operation on a setting item alone, or may be a linkage operation on two or more setting items.

After displaying the third prompt information, the vehicle receives the second adjustment operation performed by the user on the component setting item, and adjusts the corresponding component setting item in response to the second adjustment operation.

If the second adjustment operation includes a linkage operation on a plurality of setting items, the vehicle may sequentially adjust the setting items in response to an operation on each setting item.

The second adjustment operation may be a linkage operation on several setting items. Therefore, to avoid a case that the vehicle continuously waits because the vehicle does not know whether the second adjustment operation of the user has ended, in some possible application scenarios, the vehicle may prompt the user to complete the second adjustment operation within preset duration while displaying the third prompt information. If the vehicle receives the second adjustment operation of the user within preset duration after the third prompt information is displayed, the vehicle adjusts a setting item correspondingly in response to the second adjustment operation. If the vehicle does not receive the second adjustment operation of the user within preset duration after the third prompt information is displayed, it indicates that the user does not need to perform fine-grained adjustment on the component setting item.

In the foregoing embodiment, automatic adjustment performed by the vehicle on the adjustable component may not meet a requirement, a driving habit, or the like of the user. Therefore, after adjusting the component setting item, the vehicle may display the third prompt information to remind the user that the user can manually adjust the component setting item of the adjustable component, to ensure that the adjusted adjustable component and the like meet the requirement or the driving habit of the user.

It can be understood that, after the user manually adjusts the seat and/or the adjustable component, if a setting item parameter of the seat and/or a setting item parameter of the component do/does not meet a driving safety requirement of the user, for example, the steering wheel is excessively high and blocks a line of sight of the user, the vehicle does not respond to an adjustment operation of the user, and still retains a setting item parameter obtained through automatic adjustment by the vehicle.

During actual application, one user may drive a vehicle a plurality of times. However, if linkage adjustment needs to be performed on the seat and another adjustable component before each time of driving, efficiency of cockpit adjustment is greatly reduced. Based on this, in some embodiments, when the user drives the vehicle for the first time, the user may be prompted to adjust a posture and perform linkage adjustment on the seat and the another adjustable component. A configuration parameter of a seat setting item and a configuration parameter of a component setting item of the adjustable component that are obtained through adjustment are stored and are associated with the current user. When the same user drives the vehicle again, the vehicle may directly obtain a series of configuration parameters corresponding to the user, and directly adjust the seat and the another adjustable component based on the configuration parameters. Because positions, heights, angles, sizes, and the like of the seat and the another adjustable component that are adjusted during the first driving meet a driving safety requirement and a driving comfort requirement of the user, when the same user drives the vehicle again, the vehicle directly adjusts the seat and the another adjustable component by using the configuration parameters of the seat setting item and the component setting item that are obtained through adjustment during the first driving, so that the seat and the another adjustable component can also meet the driving safety requirement and the driving comfort requirement of the user.

In some possible application scenarios, when driving the vehicle for the first time, the user may log in to a management system or the like configured on the vehicle, and the vehicle stores, by using the management system, user information and configuration parameters, obtained through current adjustment, of the seat setting item and another adjustable component setting item. In addition, after the user logs in to the management system, the vehicle may detect, through a sensor or the like, whether the user sits on the seat, and start to perform the cockpit adjustment method in the foregoing embodiment after the user sits on the seat.

After the vehicle automatically adjusts the seat and the another adjustable component, the user may continue to perform manual adjustment, for example, perform the first adjustment operation and the second adjustment operation. Therefore, in some embodiments, in response to the received first adjustment operation of the user, the vehicle may store a first configuration parameter of the seat setting item that is obtained after the user adjusts the seat setting item, and associate the first configuration parameter of the seat setting item with the current user. In addition, in response to the received second adjustment operation of the user, the vehicle may further store a first configuration parameter of the component setting item that is obtained after the user adjusts the component setting item, and associate the first configuration parameter of the component setting item with the current user.

After the same user drives the vehicle and sits on the seat again, the vehicle obtains a cockpit configuration parameter associated with the user, where the cockpit configuration parameter includes the first configuration parameter of the seat setting item and the first configuration parameter of the component setting item that are stored; and the vehicle separately adjusts the seat setting item and the component setting item based on the cockpit configuration parameter. In this way, when the same user drives the vehicle again, the vehicle directly adjusts the seat and the another adjustable component by using the first configuration parameters of the seat setting item and the component setting item that are obtained through adjustment during the first driving, so that the seat and the another adjustable component can also meet the driving safety requirement and the driving comfort requirement of the user.

A body size, a sitting posture, or the like of the user may change at non-first driving of the user. Therefore, in some embodiments, after the seat setting item is adjusted based on the cockpit configuration parameter associated with the user, the vehicle may alternatively re-obtain three-dimensional spatial position information after the user adjusts the seat setting item, determine current body size information of the user based on the current three-dimensional spatial position information, and obtain a second configuration parameter, matching the current body size information, of the seat setting item. When a degree of difference between the current second configuration parameter of the seat setting item and the first configuration parameter of the seat setting item in the cockpit configuration parameter obtained by the vehicle is large (to be specific, the degree of difference is greater than or equal to a preset degree of difference), the vehicle may re-adjust the seat setting item based on the current second configuration parameter of the seat setting item, so that an adjusted angle, height, position, and the like of the seat meet a safety requirement and a comfort requirement of the user in a current state.

After re-adjusting the seat setting item, the vehicle continues to re-obtain three-dimensional spatial position information of the user based on the adjusted seat setting item, and obtain a current second configuration parameter of the component setting item of the adjustable component. When a degree of difference between the current second configuration parameter of the component setting item and the first configuration parameter of the component setting item in the cockpit configuration parameter obtained by the vehicle is large (to be specific, the degree of difference is greater than or equal to a preset degree of difference), the vehicle may re-adjust the component setting item based on the current second configuration parameter of the component setting item, so that an adjusted angle, height, position, size, and the like of the adjustable component meet a safety requirement and a comfort requirement of the user in a current state.

In some possible application scenarios, the cockpit configuration parameter associated with the user may include corresponding first configuration parameters stored after the vehicle automatically adjusts the seat and the another adjustable component during the first driving of the user; or may include corresponding first configuration parameters stored by the vehicle after the user manually re-adjusts the seat and the another adjustable component after the vehicle automatically adjusts the seat and the another adjustable component during the first driving of the user.

In some other possible application scenarios, the cockpit configuration parameter associated with the user may be corresponding first configuration parameters stored after the vehicle automatically adjusts the seat and the another adjustable component during previous driving of the user; or may be corresponding first configuration parameters stored by the vehicle after the user manually re-adjusts the seat and the another adjustable component after the vehicle automatically adjusts the seat and the another adjustable component during previous driving of the user.

In some possible application scenarios, a degree of difference between the first configuration parameter of the seat setting item and a current configuration parameter of the seat setting item may be represented as a difference between the two, an absolute value of a difference between the two, an average value of the two, or the like; and a degree of difference between the first configuration parameter of the component setting item and a current configuration parameter of the component setting item may also be represented as a difference between the two, an absolute value of a difference between the two, an average value of the two, or the like.

It can be understood that, if the degree of difference between the second configuration parameter and the first configuration parameter is small (to be specific, the degree of difference is less than the preset degree of difference), the vehicle does not need to re-adjust a seat configuration or the another adjustable component based on the second configuration parameter.

During actual application, the user often drives the vehicle. In this case, the cockpit may not need to be frequently adjusted. Therefore, in some embodiments, when the user drives the vehicle for a non-first time, the user may choose, according to a requirement of the user, whether to adjust the cockpit. For example, after logging in to the management system of the vehicle, the user may perform a preset operation mode, and the vehicle starts to perform an adjustment operation in response to the preset operation mode. The preset operation mode may include stepping on a brake, inputting a voice instruction, or the like.

In some embodiments, in the foregoing cockpit adjustment method, a seat in the cockpit other than the driver's seat, for example, a co-driver seat or a rear seat, may be further adjusted.

In the foregoing embodiments, an example in which the foregoing cockpit adjustment method is applied to a vehicle is used for description. In some other embodiments, the foregoing cockpit adjustment method may alternatively be applied to another carrier equipped with a seat and another adjustable component. The another adjustable component may include one or more of a steering wheel, an imaging picture of an HUD, an outer-cockpit rearview mirror, an inner-cockpit rearview mirror, an air conditioner, and a central control screen.

In some solutions, a plurality of embodiments of this application may be combined, and a combined solution is implemented. Optionally, some operations in the processes of the method embodiments are optionally combined, and/or a sequence of some operations is optionally changed. In addition, an execution sequence of steps of each process is merely an example, and does not constitute a limitation on an execution sequence of the steps. The steps may alternatively be performed in another execution sequence. The descriptions are not intended to indicate that the execution sequence is the only sequence of performing the operations. A person of ordinary skill in the art may figure out a plurality of manners of re-sorting the operations described in embodiments of this application. In addition, it should be noted that process details related to a specific embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, other possible steps may be added to the method embodiments.

In addition, the method embodiments may be implemented separately or in combination.

It can be understood that, to implement the foregoing functions, the carrier, for example, the vehicle, includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the carrier, for example, the vehicle, may be divided into functional modules based on the foregoing method examples. For example, each functional module may be obtained through division based on each corresponding function, or two or more functions may be integrated into one processing module. The integrated module may be implemented in a form of hardware. It should be noted that division into the modules in embodiments is an example, and is merely logical function division. During actual implementation, another division manner may be used.

An embodiment of this application provides a cockpit adjustment apparatus. The apparatus includes a first information obtaining module, a first adjustment module, a second information obtaining module, and a second adjustment module.

The first information obtaining module is configured to obtain first three-dimensional spatial position information of a user in a cockpit after the user sits on a seat. For example, related method steps in S502 in the foregoing embodiments are performed.

The first adjustment module is configured to determine body size information of the user based on the first three-dimensional spatial position information, and adjust a seat setting item of the seat based on the body size information. For example, related method steps in S503 in the foregoing embodiments are performed.

The second information obtaining module is configured to re-obtain second three-dimensional spatial position information of the user in the cockpit after the seat setting item is adjusted. For example, related method steps in S504 in the foregoing embodiments are performed.

The second adjustment module is configured to adjust a component setting item of an adjustable component based on the second three-dimensional spatial position information. For example, related method steps in S505, S506, and S507 in the foregoing embodiments are performed.

In some embodiments, the cockpit adjustment apparatus further includes an association module. The association module is configured to: store a first configuration parameter, obtained through the first adjustment operation, of the seat setting item, and associate the first configuration parameter of the seat setting item with the user; and store a first configuration parameter, obtained through the second adjustment operation, of the component setting item, and associate the first configuration parameter of the component setting item with the user. In some other embodiments, the association module is further configured to store a seat setting item parameter and a component setting item parameter that are obtained through automatic adjustment by a vehicle when the user drives the vehicle for the first time.

In some embodiments, the second adjustment module is further configured to: display third prompt information after the component setting item of the adjustable component is adjusted; after the third prompt information is displayed, receive a second adjustment operation performed by the user on the component setting item; and re-adjust the component setting item in response to the second adjustment operation.

In some embodiments, the cockpit adjustment apparatus further includes a third adjustment module. The third adjustment module is configured to: after the same user sits on the seat again, obtain a cockpit configuration parameter associated with the user, where the cockpit configuration parameter includes the first configuration parameter of the seat setting item and the first configuration parameter of the component setting item that are stored, or includes a configuration parameter of the seat setting item and a configuration parameter of the component setting item of the adjustable component that are obtained through automatic adjustment by the vehicle when the user drives the vehicle for the first time; and separately adjust the seat setting item and the component setting item based on the cockpit configuration parameter.

In some embodiments, the first adjustment module is further configured to: after the seat setting item and the component setting item are adjusted based on the cockpit configuration parameter associated with the user, obtain a second configuration parameter, matching current body size information, of the seat setting item; and adjust the seat setting item based on the second configuration parameter of the seat setting item when a degree of difference between the second configuration parameter of the seat setting item and the first configuration parameter of the seat setting item is greater than or equal to a preset degree of difference.

In some embodiments, the second adjustment module is further configured to: after the seat setting item is adjusted based on the second configuration parameter of the seat setting item, obtain a second configuration parameter, matching the current second three-dimensional spatial position information of the user, of the component setting item; and adjust the component setting item based on the second configuration parameter of the component setting item when a degree of difference between the second configuration parameter of the component setting item and the first configuration parameter of the component setting item is greater than or equal to a preset degree of difference.

An embodiment of this application further provides a chip. As shown in FIG. 19, the chip may include one or more processors 1901, a memory 1902, and a communication interface 1903.

The memory 1902 and the communication interface 1903 are coupled to the processor 1901. For example, the memory 1902 and the communication interface 1903 may be coupled to the processor 1901 through a bus 1904.

The communication interface 1903 is configured to perform data transmission with another device. The memory 1902 stores computer program code. The computer program code includes computer instructions. When the computer instructions are executed by the processor 1901, the chip is enabled to perform the cockpit adjustment method in embodiments of this application.

The processor 1901 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content disclosed in embodiments of this application. The processor may be a combination of processors for implementing a computing function, for example, include a combination of one or more microprocessors, or a combination of a DSP and a microprocessor.

The bus 1904 may be a peripheral component interconnect (Peripheral Component Interconnect, PCI) bus, an extended industry standard architecture (Extended Industry Standard Architecture, EISA) bus, or the like. The bus 1904 may be classified into an address bus, a data bus, a control bus, and the like. For ease of representation, the bus is represented only by one bold line in FIG. 19. However, this does not mean that there is only one bus or only one type of bus.

An embodiment of this application further provides a vehicle. The vehicle includes the cockpit adjustment apparatus in the foregoing embodiments, or includes the chip in the foregoing embodiments.

An embodiment of this application further provides another vehicle. A cockpit of the vehicle includes a first controller, a second controller, a sensor, a seat, and an adjustable component. The adjustable component includes one or more of a steering wheel, a rearview mirror, and an imaging picture of a head-up display. The first controller is separately connected to the seat and the adjustable component. The second controller is connected to the sensor. The first controller is connected to the second controller.

The second controller is configured to obtain pose information of a user in the cockpit through the sensor, where the pose information includes one or more of a human body image, point cloud information, and radar imaging information of the user.

The first controller is configured to obtain the pose information from the second controller, and obtain first three-dimensional spatial position information of the user in the cockpit based on the pose information after the user sits on the seat.

The first controller is further configured to determine body size information of the user based on the first three-dimensional spatial position information, and adjust a seat setting item of the seat based on the body size information, where the seat setting item includes one or more of an angle, a position, and a height of the seat.

The first controller is further configured to: after the seat setting item is adjusted, re-obtain the pose information from the second controller, and re-obtain second three-dimensional spatial position information of the user in the cockpit.

The first controller is further configured to adjust a component setting item of the adjustable component based on the second three-dimensional spatial position information, where the component setting item includes one or more of a position, a height, an angle, and a size of the adjustable component.

An embodiment of this application further provides a computer-readable storage medium. The computer-readable storage medium stores computer program code. When a processor executes the computer program code, a chip performs related method steps in the method embodiments.

An embodiment of this application further provides a computer program product. When the computer program product is run on a computer, the computer is enabled to perform related method steps in the method embodiments.

The chip, the computer storage medium, and the computer program product provided in this application are all configured to perform corresponding methods provided in the foregoing descriptions. Therefore, for benefits that can be achieved by the chip, the computer storage medium, and the computer program product, refer to the benefits of the corresponding methods provided in the foregoing descriptions. Details are not described herein again.

Based on the descriptions of the foregoing implementations, a person skilled in the art may clearly understand that, for a purpose of convenient and brief description, division into the foregoing functional modules is merely used as an example for illustration. During actual application, the foregoing functions may be allocated to different functional modules and implemented according to a requirement. In other words, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division, and may be other division during actual implementation. For example, a plurality of units or components may be combined or may be integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may be one or more physical units, to be specific, may be located in one place, or may be distributed in a plurality of different places. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A cockpit adjustment method, wherein the method comprises:
obtaining first three-dimensional spatial position information of a user in a cockpit after the user sits on a seat, wherein the cockpit comprises the seat and an adjustable component, and the adjustable component comprises one or more of a steering wheel, a rearview mirror, and an imaging picture of a head-up display;
determining body size information of the user based on the first three-dimensional spatial position information, and adjusting a seat setting item of the seat based on the body size information, wherein the seat setting item comprises one or more of an angle, a position, and a height of the seat;
obtaining second three-dimensional spatial position information of the user in the cockpit after the seat setting item is adjusted; and
adjusting a component setting item of the adjustable component based on the second three-dimensional spatial position information, wherein the component setting item comprises one or more of a position, a height, an angle, and a size of the adjustable component.

2. The method according to claim 1, wherein the obtaining first three-dimensional spatial position information of a user in a cockpit after the user sits on a seat comprises:
displaying first prompt information after the user sits on the seat, wherein the first prompt information is used to remind the user to adjust a sitting posture;
obtaining pose information of the user in the cockpit after the first prompt information is displayed for preset duration, wherein the pose information comprises one or more of a human body image, point cloud information, and radar imaging information of the user; and
determining the first three-dimensional spatial position information of the user in a spatial coordinate system of the cockpit based on the pose information.

3. The method according to claim 1 or 2, wherein the adjusting a seat setting item of the seat based on the body size information comprises:
obtaining a preset configuration parameter, matching the body size information, of the seat setting item; and
adjusting one or more of the angle, the position, and the height of the seat based on the preset configuration parameter of the seat setting item.

4. The method according to any one of claims 1 to 3, wherein the adjusting a component setting item of the adjustable component based on the second three-dimensional spatial position information comprises:
determining an eye position and an upper-body position of the user and an arm length of the user based on the second three-dimensional spatial position information;
obtaining a preset configuration parameter of a steering wheel setting item, wherein the preset configuration parameter matches the eye position, the upper-body position, and the arm length; and
adjusting a height and an angle of the steering wheel based on the preset configuration parameter of the steering wheel setting item.

5. The method according to any one of claims 1 to 3, wherein the adjusting a component setting item of the adjustable component based on the second three-dimensional spatial position information comprises:
determining an eye position of the user based on the second three-dimensional spatial position information;
obtaining a preset configuration parameter, matching the eye position, of the imaging picture of the head-up display; and
adjusting a position and a size of the imaging picture of the head-up display based on the preset configuration parameter of the imaging picture of the head-up display.

6. The method according to any one of claims 1 to 3, wherein the adjusting a component setting item of the adjustable component based on the second three-dimensional spatial position information comprises:
determining an eye position of the user based on the second three-dimensional spatial position information;
determining a preset configuration parameter of the rearview mirror based on the eye position and a vehicle size; and
adjusting an angle of the rearview mirror based on the preset configuration parameter of the rearview mirror.

7. The method according to any one of claims 1 to 6, wherein the obtaining second three-dimensional spatial position information of the user in the cockpit after the seat setting item is adjusted comprises:
displaying second prompt information after the seat setting item of the seat is adjusted, wherein the second prompt information is used to remind the user to adjust the seat setting item of the seat;
after the second prompt information is displayed, receiving a first adjustment operation performed by the user on the seat setting item; and
in response to the first adjustment operation, re-adjusting the seat setting item, and obtaining current second three-dimensional spatial position information of the user in the cockpit.

8. The method according to claim 7, wherein the method further comprises:
in response to the first adjustment operation, storing a first configuration parameter, obtained through the first adjustment operation, of the seat setting item; and
associating the first configuration parameter of the seat setting item with the user.

9. The method according to any one of claims 1 to 8, wherein the method further comprises:
displaying third prompt information after the component setting item of the adjustable component is adjusted, wherein the third prompt information is used to remind the user to adjust the component setting item of the adjustable component;
after the third prompt information is displayed, receiving a second adjustment operation performed by the user on the component setting item;
in response to the second adjustment operation, re-adjusting the component setting item, and storing a first configuration parameter, obtained through the second adjustment operation, of the component setting item; and
associating the first configuration parameter of the component setting item with the user.

10. The method according to any one of claims 1 to 9, wherein the method further comprises:
after the same user sits on the seat again, obtaining a cockpit configuration parameter associated with the user, wherein the cockpit configuration parameter comprises the first configuration parameter of the seat setting item and the first configuration parameter of the component setting item that are stored; and
separately adjusting the seat setting item and the component setting item based on the cockpit configuration parameter.

11. The method according to claim 10, wherein the method further comprises:
after the seat setting item and the component setting item are adjusted based on the cockpit configuration parameter associated with the user, obtaining a second configuration parameter, matching current body size information, of the seat setting item; and
adjusting the seat setting item based on the second configuration parameter of the seat setting item when a degree of difference between the second configuration parameter of the seat setting item and the first configuration parameter of the seat setting item is greater than or equal to a preset degree of difference.

12. The method according to claim 11, wherein the method further comprises:
after the seat setting item is adjusted based on the second configuration parameter of the seat setting item, obtaining a second configuration parameter, matching the current second three-dimensional spatial position information of the user, of the component setting item; and
adjusting the component setting item based on the second configuration parameter of the component setting item when a degree of difference between the second configuration parameter of the component setting item and the first configuration parameter of the component setting item is greater than or equal to a preset degree of difference.

13. A cockpit adjustment apparatus, wherein the apparatus comprises a first information obtaining module, a first adjustment module, a second information obtaining module, and a second adjustment module;
the first information obtaining module is configured to obtain first three-dimensional spatial position information of a user in a cockpit after the user sits on a seat, wherein the cockpit comprises the seat and an adjustable component, and the adjustable component comprises one or more of a steering wheel, a rearview mirror, and an imaging picture of a head-up display;
the first adjustment module is configured to determine body size information of the user based on the first three-dimensional spatial position information, and adjust a seat setting item of the seat based on the body size information, wherein the seat setting item comprises one or more of an angle, a position, and a height of the seat;
the second information obtaining module is configured to obtain second three-dimensional spatial position information of the user in the cockpit after the seat setting item is adjusted; and
the second adjustment module is configured to adjust a component setting item of the adjustable component based on the second three-dimensional spatial position information, wherein the component setting item comprises one or more of a position, a height, an angle, and a size of the adjustable component.

14. A chip, comprising a memory and one or more processors, wherein the memory is coupled to the processor, the memory stores computer program code, the computer program code comprises computer instructions, and when the computer instructions are executed by the processor, the chip is enabled to perform the cockpit adjustment method according to any one of claims 1 to 12.

15. A vehicle, wherein a cockpit of the vehicle comprises a first controller, a second controller, a sensor, a seat, and an adjustable component, the adjustable component comprises one or more of a steering wheel, a rearview mirror, and an imaging picture of a head-up display, the first controller is separately connected to the seat and the adjustable component, the second controller is connected to the sensor, and the first controller is connected to the second controller;
the second controller is configured to obtain pose information of a user in the cockpit through the sensor, wherein the pose information comprises one or more of a human body image, point cloud information, and radar imaging information of the user;
the first controller is configured to obtain the pose information from the second controller, and obtain first three-dimensional spatial position information of the user in the cockpit based on the pose information after the user sits on the seat;
the first controller is further configured to determine body size information of the user based on the first three-dimensional spatial position information, and adjust a seat setting item of the seat based on the body size information, wherein the seat setting item comprises one or more of an angle, a position, and a height of the seat;
the first controller is further configured to: after the seat setting item is adjusted, obtain the pose information from the second controller, and obtain second three-dimensional spatial position information of the user in the cockpit; and
the first controller is further configured to adjust a component setting item of the adjustable component based on the second three-dimensional spatial position information, wherein the component setting item comprises one or more of a position, a height, an angle, and a size of the adjustable component.

16. A vehicle, wherein the vehicle comprises the cockpit adjustment apparatus according to claim 13, or comprises the chip according to claim 14.

17. A computer-readable storage medium, comprising computer instructions, wherein when the computer instructions are run on a chip, the chip is enabled to perform the cockpit adjustment method according to any one of claims 1 to 12.
